# EUROPEAN PATENT SPECIFICATION

(11) **EP 4 040 728 B1**
(45) Date of publication and mention of the grant of the patent: **11.12.2024**
(21) Application number: 20871463.4
(22) Date of filing: 14.07.2020
(51) Int. Cl.: H04L 41/0604, H04L 41/0823, H04L 41/0895

(54) **FILTERING INFORMATION CONFIGURATION METHOD AND SYSTEM**
VERFAHREN UND SYSTEM FÜR FILTERINFORMATIONSKONFIGURATION
PROCÉDÉ ET SYSTÈME DE CONFIGURATION D'INFORMATIONS DE FILTRAGE

(30) Priority: 30.09.2019 CN 201910944545
(43) Date of publication of application: 10.08.2022
(73) Proprietor: ZTE Corporation, Shenzhen, Guangdong 518057 (CN)
(72) Inventor: NIU, Xiaobing, Shenzhen, Guangdong 518057 (CN)
(74) Representative: Novagraaf Technologies
(86) International application number: PCT/CN2020/101943
(87) International publication number: WO 2021/063069

(56) References cited:
- EP-A1- 2 291 949
- WO-A1-2009/129841
- WO-A1-2018/033773
- CN-A- 103 975 625
- CN-A- 105 743 711
- CN-A- 106 487 696
- CN-A- 107 968 747
- US-A1- 2014 071 834

## Description

### Technical Field

The present invention relates to the technical field of communications, and in particular to a filtering information configuration method and system.

### Background

A management control continuum (Management Control Continuum, MCC) system integrates a management function and a control function, which are essentially the same, so as to realize unified management and control of transport resources and provide upper-level users with integrated management and control services.

The MCC system is connected with a forwarding plane network element, and when a forwarding plane resource is faulty and affects a Connection, the MCC system needs to start connection recovery. In a traditional network element, a fault generally needs to be confirmed before it is reported to a management plane or network management system of the MCC system, it is confirmed that the generation time of the fault is 2±0.5 seconds, and it is confirmed that the disappearance time of the fault is 10±0.5 seconds. By means of such a delayed confirmation mechanism, it is possible to reduce messages reported to the management plane when forwarding plane faults frequently occur or disappear, so as to avoid adverse effects on the management plane. However, this delayed confirmation mechanism prolongs the fault recovery time, and has a greater quality impact on some key services that need to recover the connection in time.

Patent document WO 2018/033773A1 provides related technical solutions; however, the above-mentioned problem still remains unsolved.

In view of the problem in the prior art that the quality of key services is greatly affected by the delayed reporting of fault events, no effective solution has yet been proposed.

### Summary

Embodiments of the present invention provide a filtering information configuration method, apparatus and system, so as to at least solve the problem in related art that the quality of key services is greatly affected by the delayed reporting of fault events.

The filtering information configuration methods, apparatuses and systems are implemented as disclosed in the claims of the present invention.

By means of the filtering information configuration method, apparatus and system provided by the embodiments of the present invention, the acquired first fault event filtering information is converted into the second fault event filtering information in combination with the corresponding relationship between the subnetwork point and the forwarding point, and the second fault event filtering information including the forwarding point identifier and the fault fast reporting enable state is configured to the forwarding plane network element, so that the forwarding plane network element can determine whether to report a fault event rapidly according to the second fault event filtering information. The purpose of directly reporting the fault events of key services to a management system according to configuration without waiting for delayed confirmation is realized, the problem in the prior art that the quality of the key services is greatly affected by the delayed reporting of the fault events is solved, the fault events in the MCC system may be reported rapidly and selectively or reported after waiting for fault confirmation, and the processing quality of the key services is improved.

### Brief Description of the Drawings

The drawings described herein are used for provide a further understanding of the present invention and constitute a part of the present application. Exemplary embodiments of the present invention and descriptions thereof are used for explaining the present invention, but do not constitute improper limitations of the present invention. In the drawings:
Fig. 1 is a flow diagram of an optional filtering information configuration method in an embodiment of the present invention;
Fig. 2 is a schematic diagram of a hardware environment of a filtering information configuration method according to an embodiment of the present invention;
Fig. 3 is a schematic structural diagram of an optional MCC system according to an embodiment of the present invention;
Fig. 4 is a flow diagram of another optional filtering information configuration method in an embodiment of the present invention;
Fig. 5 is a structural block diagram of an optional filtering information configuration apparatus according to an embodiment of the present invention;
Fig. 6 is a structural block diagram of another optional filtering information configuration apparatus according to an embodiment of the present invention;
Fig. 7 is a structural block diagram of an optional filtering information configuration system according to an embodiment of the present invention;
Fig. 8 is a structural block diagram of another optional filtering information configuration system according to an embodiment of the present invention;
Fig. 9 is a topological structure diagram of an optional forwarding plane network element according to an embodiment of the present invention; and
Fig. 10 is a schematic structural diagram of an optional electronic apparatus according to an embodiment of the invention.

### Detailed Description of the Embodiments

The present invention will be described in detail with reference to the drawings and in conjunction with the embodiments. It should be noted that, if there is no conflict, the embodiments in the present application and the features in the embodiments may be combined with each other.

It should be noted that, the terms "first" and "second" and the like used in the specification, claims and the above drawings of the present invention are used for distinguishing similar objects, and are not necessarily used for describing a specific sequence or precedence order.

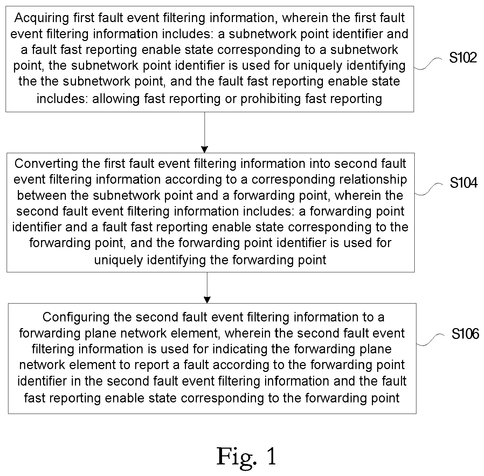

An embodiment of the present invention provides a filtering information configuration method. Fig. 1 is a flow diagram of an optional filtering information configuration method in the embodiment of the present invention. As shown in Fig. 1, the method includes:
step S102, acquiring first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
step S104, converting the first fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
step S106, configuring the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

By means of the above method, the acquired first fault event filtering information is converted into the second fault event filtering information in combination with the corresponding relationship between the subnetwork point and the forwarding point, and the second fault event filtering information including the forwarding point identifier and the fault fast reporting enable state is configured to the forwarding plane network element, so that the forwarding plane network element may determine whether to report a fault event rapidly according to the second fault event filtering information. The purpose of directly reporting the fault events of key services to a management system according to configuration without waiting for delayed confirmation is realized, the problem in the prior art that the quality of the key services is greatly affected by the delayed reporting of all the fault events is solved, the fault events in the MCC system may be reported rapidly and selectively or reported after waiting for fault confirmation, and the processing quality of the key services is improved.

It should be noted that, the forwarding point (Forwarding Point, referred to as FP) involved in the embodiment of the present invention represents a resource in the forwarding plane network element or the forwarding node, which may include a forwarding end point (Forwarding end Point, referred to as FwEP), wherein FwEP represents a forwarding point related to a source or sink of path termination. The MCC system may include a software defined network (Software Defined Network, referred to as SDN) controller, a network element management system (Network Element Management System, referred to as EMS), a network management system (Network Management System, referred to as NMS), and a control plane. A functional module in the MCC system provides functional services through an interface.

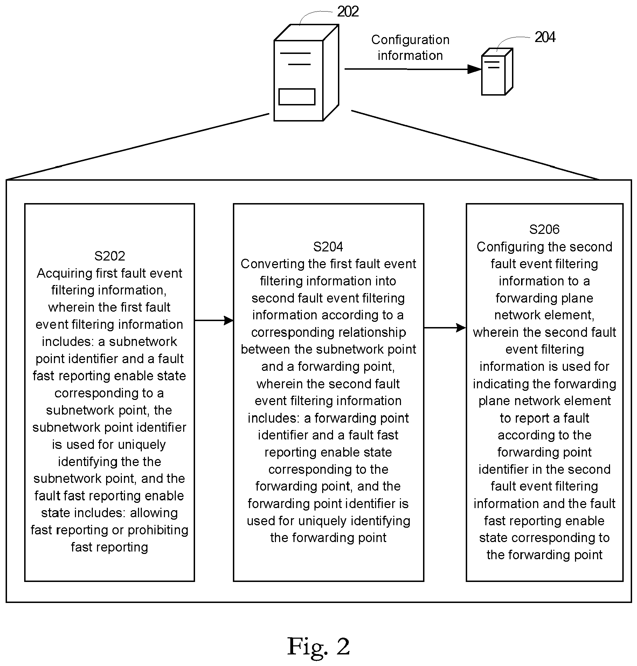

Fig. 2 is a schematic diagram of a hardware environment of a filtering information configuration method according to an embodiment of the present invention. Optionally, in the present embodiment, the filtering information configuration method may be applied to the hardware environment formed by a server 202 and a forwarding plane network element 204 as shown in Fig. 2. An executive body of various steps shown in Fig. 1 may be, but is not limited to, the server 202. As shown in Fig. 2, the server 202 converts the acquired first fault event filtering information into the second fault event filtering information, and then configures the second fault event filtering information to the forwarding plane network element 204. The above server 202 and the forwarding plane network element 204 may, but are not limited to, implement data interaction through a network, and the above network may include, but is not limited to, a wireless network or a wired network, wherein the wireless network includes: Bluetooth, WIFI and other networks that realize wireless communication. The above wired network may include, but is not limited to: a wide area network, a metropolitan area network, and a local area network. The above description is only an example, and this is not limited in any way in the present embodiment.

The processing steps in the server 202 include:
Step S202, acquiring first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
step S204, converting the first fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
step S206, configuring the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

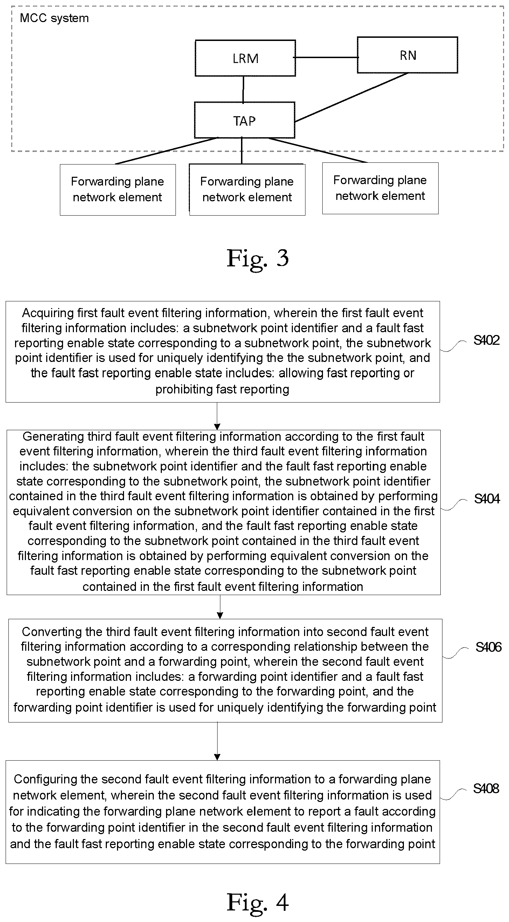

Fig. 3 is a schematic structural diagram of an optional MCC system according to an embodiment of the present invention. As shown in Fig. 3, Fig. 3 shows the relationship among a link resources manager (Link Resources Manager, referred to as LRM) module, a termination and adaptation performer (Termination and Adaptation Performer, referred to as TAP) module, a resource notification (Resource Notification, referred to as RN) module and the forwarding plane network element.

In order to accelerate the connection recovery based on the MCC system, a specific fault type can be filtered by setting the fault event filtering information, and is rapidly reported to the MCC system without fault confirmation, thereby accelerating the connection recovery.

The resource (such as a time slot and a bandwidth) of the forwarding plane needs to be converted into a resource that may can be managed and controlled in the MCC system. The resource of the forwarding plane is represented by the forwarding point FP or the forwarding end point FwEP, and the resource used by the MCC system is represented by a subnetwork point (Subnetwork Point, referred to as SNP). The relationship between FP/FwEP and SNP is managed by the TAP module, one SNP may be bound to one FP/FwEP, and multiple SNPs may also be bound to one FP/FwEP, so as to indicate that the multiple SNPs share the FP/FwEP resource. A connection maintained by the MCC system uses a series of SNPs from the management perspective; and from the perspective of the forwarding plane, it uses the FP/FwEP resource in the forwarding plane network element.

A fault reporting management (Fault Reporting Management, referred to as FRM) module is an important function in the forwarding plane network element specified in ITU-T G.7710, and it mainly registers faults generated in the network element and rapidly reports faults that need to be reported to a specific MCC system according to the fault event filtering information, such as an SDN controller or a control plane.

Optionally, the above step S202 may be implemented by the LRM module, and the above steps S204 to S208 may be implemented by the TAP module. The first fault event filtering information acquired in step S202 may be generated by the LRM module, and may also be received from other external network systems, for example, from the network management system EMS/NMS.

Optionally, the above step S206 may be implemented by the following steps:
S1, acquiring forwarding feature parameters of the forwarding point, wherein the forwarding feature parameters at least include: the forwarding point identifier, the position of the forwarding point in a network layer, and a fault cause corresponding to the forwarding point; and
S2, converting the first fault event filtering information into the second fault event filtering information according to the forwarding feature parameters of the forwarding point and the corresponding relationship between the subnetwork point and the forwarding point, wherein the second fault event filtering information at least further includes: the forwarding point identifier, the position of the forwarding point in the network layer, the fault cause corresponding to the forwarding point, and the fault fast reporting enable state corresponding to the forwarding point.

It should be noted that, the identifier/position of the forwarding point is intended to uniquely locate the forwarding point in the network layer, the fault causes corresponding to the same forwarding point may be different, when the same forwarding point corresponds to different subnetwork points, the fault fast reporting enable states of the forwarding point may also be different, and the fault fast reporting enable state of the forwarding point is determined according to the fault fast reporting enable state of the corresponding subnetwork point. The position of the forwarding point may be an input side of the forwarding plane network element, or an output side of the forwarding plane network element, or other positions in the network layer, which is not limited in the embodiment of the present invention. The fault cause corresponding to the forwarding point may be signal failure, or signal degradation, or possible fault causes of any other forwarding points or forwarding end points.

The first fault event filtering information contains the subnetwork point identifier and the fault fast reporting enable state corresponding to the subnetwork point, in combination with the corresponding relationship (which may be a mapping relationship table) between the subnetwork point and the forwarding point, the forwarding point corresponding to the subnetwork point is determined, then the identifier/position and the fault cause of the forwarding point are determined according to the forwarding feature parameters of the forwarding point, the fault fast reporting enable state of the corresponding forwarding point is then determined according to the fault fast reporting enable state of the subnetwork point, in this way, the identifier/position, the fault cause and the fault fast reporting enable state of the forwarding point are all set correspondingly, the second fault event filtering information is generated and is configured to the forwarding plane network element, after receiving the fault event, the forwarding plane network element firstly determines a port where the fault occurs, that is, determines the identifier/position of the forwarding point, then finds the fault cause, and then judges whether to allow or prohibit fast reporting according to the corresponding fault fast reporting enable state. If the fault fast reporting enable state actually allows fast reporting, the forwarding plane network element directly reports the fault event to the MCC system or other management systems without waiting for fault confirmation, so as to request for connection recovery, and if the fault fast reporting enable state shows that fast reporting is prohibited, the forwarding plane network element waits for fault confirmation, and then reports the fault event to the MCC system or other management systems.

Optionally, the second fault event filtering information may further include: a state of the fault, wherein the state of the fault includes one of the following: a generation state and a disappearance state. For example, when the fault fast reporting enable state of a certain forwarding point corresponds to allowing fast reporting, and the corresponding state of the fault is the "generation state", when the forwarding plane acquires a fault in the "generation state", it will directly report the fault without waiting for fault confirmation, and the state of the fault is the "generation state"; when the fault fast reporting enable state of a certain forwarding point corresponds to allowing fast reporting, and the corresponding state of the fault is the "disappearance state", when the forwarding plane acquires a fault in the "disappearance state", it will directly report the fault without waiting for fault confirmation, and the state of the fault is the "disappearance state".

Optionally, the fault fast reporting enable state of the forwarding point may be determined by the following steps:
S1, determining, according to the corresponding relationship between the subnetwork point and the forwarding point, the forwarding point corresponding to a first subnetwork point as a first forwarding point;
S2, when the fault fast reporting enable state corresponding to the first subnetwork point is allowing fast reporting, determining the fault fast reporting enable state corresponding to the first forwarding point as allowing fast reporting; and
S3, when the fault fast reporting enable state corresponding to the first subnetwork point is prohibiting fast reporting, determining, according to a type of the corresponding relationship between the first subnetwork point and the first forwarding point, the fault fast reporting enable state corresponding to the first forwarding point, wherein the type of the corresponding relationship includes: a one-to-one type or a many-to-one type.
S31, when the type of the corresponding relationship between the first subnetwork point and the first forwarding point is the one-to-one type, determining the fault fast reporting enable state corresponding to the first forwarding point as prohibiting fast reporting; and
S32, when the type of the corresponding relationship between the first subnetwork point and the first forwarding point is the many-to-one type, judging the fault fast reporting enable states corresponding to other subnetwork points that have a corresponding relationship with the first forwarding point, when the fault fast reporting enable states corresponding to the other subnetwork points are all prohibiting fast reporting, determining the fault fast reporting enable state corresponding to the first forwarding point as prohibiting fast reporting, and when the fault fast reporting enable state corresponding to any subnetwork point among the other subnetwork points is allowing fast reporting, determining the fault fast reporting enable state corresponding to the first forwarding point as allowing fast reporting.

Optionally, the converting the first fault event filtering information into the second fault event filtering information according to the corresponding relationship between the subnetwork point and the forwarding point includes:
generating third fault event filtering information according to the first fault event filtering information, wherein the third fault event filtering information includes: the subnetwork point identifier and the fault fast reporting enable state corresponding to the subnetwork point; and
converting the third fault event filtering information into the second fault event filtering information according to the corresponding relationship between the subnetwork point and the forwarding point.

Fig. 4 is a flow diagram of another optional filtering information configuration method in an embodiment of the present invention. As shown in Fig. 4, the method includes:
step S402, acquiring first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
step S404, generating third fault event filtering information according to the first fault event filtering information, wherein the third fault event filtering information includes: the subnetwork point identifier and the fault fast reporting enable state corresponding to the subnetwork point, the subnetwork point identifier contained in the third fault event filtering information is obtained by performing equivalent conversion on the subnetwork point identifier contained in the first fault event filtering information, and the fault fast reporting enable state corresponding to the subnetwork point contained in the third fault event filtering information is obtained by performing equivalent conversion on the fault fast reporting enable state corresponding to the subnetwork point contained in the first fault event filtering information;
step S406, converting the third fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
step S408, configuring the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

Optionally, in the MCC system, the first fault event filtering information is generated or received by the LRM module, before being converted into the second fault event filtering information, the third fault event filtering information may be generated by the RN module according to the first fault event filtering information, the main function of the RN module is to integrate and manage various signaling messages or configuration messages, it may integrate the subnetwork point identifier and the fault fast reporting enable state contained in the first fault event filtering information into the third fault event filtering information, and then send the same to the TAP module, and the TAP module converts the third fault event filtering information into the second fault event filtering information.

Optionally, converting the third fault event filtering information into the second fault event filtering information according to the corresponding relationship between the subnetwork point and the forwarding point includes: acquiring forwarding feature parameters of the forwarding point, wherein the forwarding feature parameters at least include: the forwarding point identifier, the position of the forwarding point in a network layer, and a fault cause corresponding to the forwarding point; and converting the third fault event filtering information into the second fault event filtering information according to the forwarding feature parameters of the forwarding point and the corresponding relationship between the subnetwork point and the forwarding point, wherein the second fault event filtering information at least further includes: the position of the forwarding point in the network layer, the fault cause corresponding to the forwarding point, and a state of the fault.

Optionally, converting the third fault event filtering information into the second fault event filtering information according to the corresponding relationship between the subnetwork point and the forwarding point includes: determining, according to the corresponding relationship between the subnetwork point and the forwarding point, the forwarding point corresponding to a first subnetwork point as a first forwarding point; when the fault fast reporting enable state corresponding to the first subnetwork point is allowing fast reporting, determining the fault fast reporting enable state corresponding to the first forwarding point as allowing fast reporting; and when the fault fast reporting enable state corresponding to the first subnetwork point is prohibiting fast reporting, determining, according to a type of the corresponding relationship between the first subnetwork point and the first forwarding point, the fault fast reporting enable state corresponding to the first forwarding point, wherein the type of the corresponding relationship includes: a one-to-one type or a many-to-one type.

Optionally, when the fault fast reporting enable state corresponding to the first subnetwork point is prohibiting fast reporting, determining, according to the type of the corresponding relationship between the first subnetwork point and the first forwarding point, the fault fast reporting enable state corresponding to the first forwarding point includes: when the type of the corresponding relationship between the first subnetwork point and the first forwarding point is the one-to-one type, determining the fault fast reporting enable state corresponding to the first forwarding point as prohibiting fast reporting; and when the type of the corresponding relationship between the first subnetwork point and the first forwarding point is the many-to-one type, judging the fault fast reporting enable states corresponding to other subnetwork points that have a corresponding relationship with the first forwarding point, when the fault fast reporting enable states corresponding to the other subnetwork points are all prohibiting fast reporting, determining the fault fast reporting enable state corresponding to the first forwarding point as prohibiting fast reporting, and when the fault fast reporting enable state corresponding to any subnetwork point among the other subnetwork points is allowing fast reporting, determining the fault fast reporting enable state corresponding to the first forwarding point as allowing fast reporting.

Optionally, the first fault event filtering information generated or received by the LRM module represents the fault fast reporting enable state configured to one or more subnetwork points, and the enable state of each subnetwork point includes allowing or prohibiting. The first fault event filtering information may include one or more records, and each record at least includes: the subnetwork point identifier and the fault fast reporting enable state.

Optionally, the third fault event filtering information represents the fault fast reporting enable state configured to one or more subnetwork points, and the enable state configured to each subnetwork point includes allowing or prohibiting. The third fault event filtering information may include one or more records, and each record at least includes: a subnetwork point configuration identifier and the fault fast reporting enable state.

The subnetwork point configuration identifier in the first fault event filtering information is equivalently converted into the subnetwork point configuration identifier in the third fault event filtering information, and the fault fast reporting enable state in the first fault event filtering information is equivalently converted into the fault fast reporting enable state in the third fault event filtering information.

Optionally, the second fault event filtering information represents the fault fast reporting enable state configured to one or more forwarding points, and the enable state of each forwarding point includes allowing or prohibiting. The second fault event filtering information may include one or more records, and each record at least includes: the identifier/position of the forwarding point, the fault cause and the fault fast reporting enable state. Optionally, the record may further include a generation state or disappearance state of the fault.

The subnetwork point identifier in the third fault event filtering information is converted into the identifier/position of the forwarding point in the second fault event filtering information through a binding relationship;
the fault fast reporting enable state in the third fault event filtering information is converted into the fault fast reporting enable state in the second fault event filtering information; and
according to forwarding technical features of the forwarding point, a network hierarchy where the forwarding point is located is at least contained, the identifier/position of the forwarding point is acquired, and one or more fault causes that may trigger the connection recovery on the resource of the forwarding point include signal failure, and may further include signal degradation.

Optionally, the identifier/position of the forwarding point may further include information about the forwarding point being located on an input side or an output side of the network element.

The embodiments of the present invention further provide a filtering information configuration apparatus, which is used for implementing the embodiments and preferred implementations of the above filtering information configuration method, and those that have been described will not be repeated. As used below, the term "module" may implement a combination of software and/or hardware with predetermined functions. Although the apparatus described in the following embodiments is preferably implemented by software, the implementation by hardware or the combination of software and hardware is also possible and conceived.

It should be noted that, for the various forgoing method embodiments, for the sake of simple description, they are all expressed as a series of action combinations, but those skilled in the art should know that the present invention is not limited by the described sequence of actions, because according to the present invention, some steps may be performed in other sequences or at the same time. Secondly, those skilled in the art should also know that the embodiments described in the specification are all preferred embodiments, and the actions and modules involved are not necessarily required by the present invention.

By means of the description of the above implementations, those skilled in the art may clearly understand that the method according to the above embodiments may be implemented by software plus a necessary general hardware platform, of course, it may also be implemented by hardware, but the former is a better implementation in many cases. Based on this understanding, the technical solutions of the present invention substantially, or a part contributing to the prior art may be implemented in the form of a software product, the computer software product is stored in a storage medium (such as an ROM/RAM, a magnetic disk, and an optical disk), and includes a plurality of instructions for enabling a terminal device (which may be a mobile phone, a computer, a server, or a network device or the like) to execute the method described in various embodiments of the present invention.

The embodiments of the present invention further provide a filtering information configuration apparatus, which is used for implementing the embodiments and preferred implementations of the above filtering information configuration method, and those that have been described will not be repeated. As used below, the term "module" may implement a combination of software and/or hardware with predetermined functions. Although the apparatus described in the following embodiments is preferably implemented by software, the implementation by hardware or the combination of software and hardware is also possible and conceived.

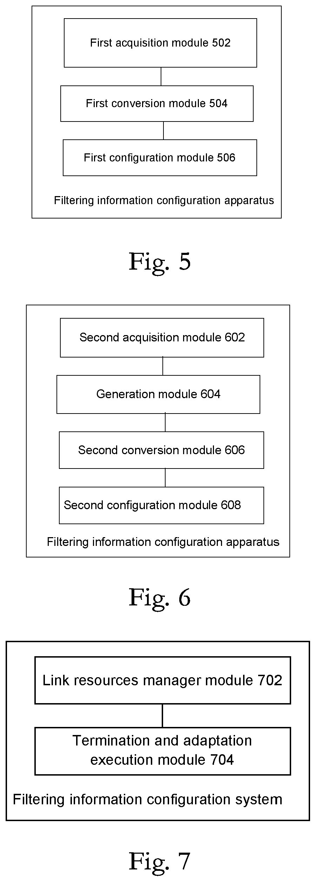

Fig. 5 is a structural block diagram of an optional filtering information configuration apparatus according to an embodiment of the present invention. As shown in Fig. 5, the apparatus includes:
a first acquisition module 502, configured to acquire first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
a first conversion module 504, configured to convert the first fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
a first configuration module 506, configured to configure the second fault event filtering information to a forwarding plane network element, wherein the second fault event filtering information is used for indicating the forwarding plane network element to report a fault event according to the forwarding point identifier in the second fault event filtering information and the fault fast reporting enable state corresponding to the forwarding point.

Fig. 6 is a structural block diagram of another optional filtering information configuration apparatus according to an embodiment of the present invention. As shown in Fig. 6, the apparatus includes:
a second acquisition module 602, configured to acquire first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
a generation module 604, configured to generate third fault event filtering information according to the first fault event filtering information, wherein the third fault event filtering information includes: the subnetwork point identifier and the fault fast reporting enable state corresponding to the subnetwork point, the subnetwork point identifier contained in the third fault event filtering information is obtained by performing equivalent conversion on the subnetwork point identifier contained in the first fault event filtering information, and the fault fast reporting enable state corresponding to the subnetwork point contained in the third fault event filtering information is obtained by performing equivalent conversion on the fault fast reporting enable state corresponding to the subnetwork point contained in the first fault event filtering information;
a second conversion module 606, configured to convert the third fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
a second configuration module 608, configured to configure the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

The embodiments of the present invention further provide a filtering information configuration system, the apparatus is used for implementing the embodiments and preferred implementations of the above filtering information configuration method, and those that have been described will not be repeated. As used below, the term "module" may implement a combination of software and/or hardware with predetermined functions. Although the apparatus described in the following embodiments is preferably implemented by software, the implementation by hardware or the combination of software and hardware is also possible and conceived

Fig. 7 is a structural block diagram of an optional filtering information configuration system according to an embodiment of the present invention. As shown in Fig. 7, the system includes:
a link resources manager LRM module 702, configured to acquire first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
a termination and adaptation performer TAP module 704, configured to convert the first fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
the TAP module 704 is further configured to configure the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

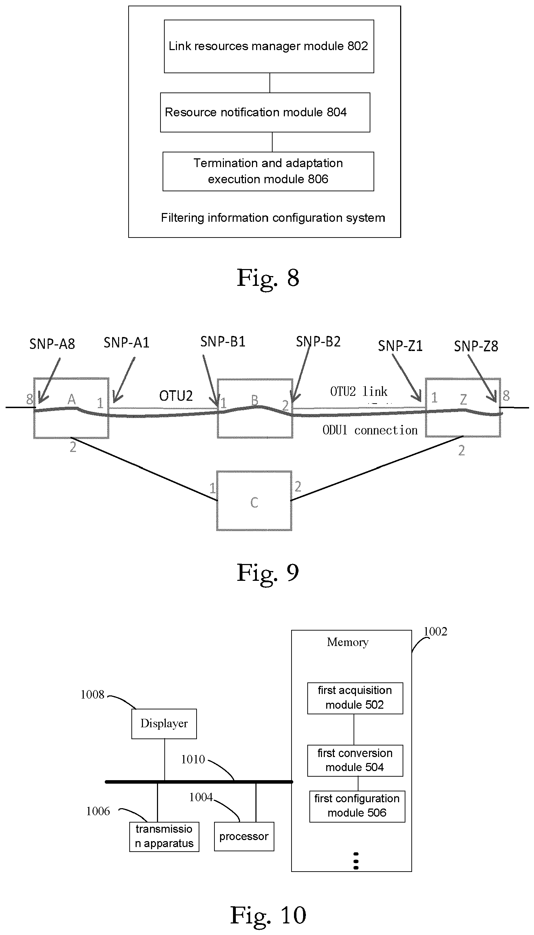

Fig. 8 is a structural block diagram of another optional filtering information configuration system according to an embodiment of the present invention. As shown in Fig. 8, the system includes:
a link resources manager module 802, configured to acquire first fault event filtering information, wherein the first fault event filtering information includes: a subnetwork point identifier and a fault fast reporting enable state corresponding to a subnetwork point, the subnetwork point identifier is used for uniquely identifying the subnetwork point, and the fault fast reporting enable state includes: allowing fast reporting or prohibiting fast reporting;
a resource notification module 804, configured to generate third fault event filtering information according to the first fault event filtering information, wherein the third fault event filtering information is used for integrating the first fault event filtering information, and the third fault event filtering information includes: the subnetwork point identifier and the fault fast reporting enable state corresponding to the subnetwork point;
a termination and adaptation execution module 806, configured to convert the third fault event filtering information into second fault event filtering information according to a corresponding relationship between the subnetwork point and a forwarding point, wherein the second fault event filtering information includes: a forwarding point identifier and a fault fast reporting enable state corresponding to the forwarding point, and the forwarding point identifier is used for uniquely identifying the forwarding point; and
the termination and adaptation execution module 806 is further configured to configure the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

In order to better understand the technical solutions provided by the embodiments of the present invention, a description will be given below via specific examples.

### Example 1:

Fig. 9 is a topological structure diagram of an optional forwarding plane network element according to an embodiment of the present invention. As shown in Fig. 9, in a topology composed of four forwarding plane network elements ABCZ, the forwarding plane network elements are interconnected by optical transport unit OTU2 links. On this network, an optical data unit ODU 1 connection between a 8# port of a point A point and the 8# port of a point Z may be established through an MCC system, such as an SDN controller or a control plane. No tandem connection monitor (Tandem Connection Monitor, referred to as TCM) related fault monitoring is configured in the topological structure shown in Fig. 6. Table 1 shows a binding relationship between a forwarding plane resource, that is, a subnetwork point (Subnetwork Point, referred to as SNP), used by the connection and FP/FwEP.

**Table 1**

| SNP identifier | | | Bound FP resource |
|---|---|---|---|
| | SNP-A8 | 1#ODU1 of 8#OTU2 port of network element A | |
| | SNP-A1 | 1#ODU1 of 1#OTU2 port of network element A | |
| | SNP-B1 | 1#ODU1 of 1#OTU2 port of network element B | |
| | SNP-B2 | 1#ODU1 of 2#OTU2 port of network element B | |
| | SNP-Z1 | 1#ODU1 of 1#OTU2 port of network element Z | |
| | SNP-Z8 | | 1#ODU1 of 8#OTU2 port of network element Z |

In order to accelerate the fault recovery of the ODU1 connection, the MCC system may configure a specific SNP to allow fault reporting or prohibit fault reporting. In present embodiment, the fault fast reporting enable states of all the SNPs used by the connection are set to allow, that is, the fault of the forwarding plane resource used by the connection may be rapidly reported to the MCC system through FRM.

The filtering information configuration method provided by the embodiment of the present invention may include the following steps:
Step A: an LRM generates or receives first fault event filtering information.

In the present embodiment, the first fault event filtering information generated by the LRM includes 6 fault event filtering information records, and each record at least includes: an SNP identifier and a fault fast reporting enable state. All records are as follows:

| SNP identifier | | Fault fast reporting enable state | |
|---|---|---|---|
| | SNP-A8 | | Allow |
| | SNP-A1 | | Allow |
| | SNP-B1 | | Allow |
| | SNP-B2 | | Allow |
| | SNP-Z1 | | Allow |
| | SNP-Z8 | | Allow |

The first fault event filtering information may also come from other configurations, such as a network management system EMS/NMS, and other components in the MCC system, such as a CC.

Step B: the LRM transmits the first fault event filtering information to a TAP.

Step C: the TAP module converts the first fault event filtering information into second fault event filtering information according to a binding relationship between a subnetwork point and a forwarding point, and forwarding technical features of the forwarding point or a forwarding end point.

In the present example, each FP is only bound to one SNP, and correspondingly, 6 SNPs correspond to 6 FPs.

When the second fault event filtering information is generated, the second fault event filtering information may include multiple records, and each record at least includes: FP identifier and position, a fault cause, and a fault fast reporting enable state.

In the present embodiment, according to a network hierarchical structure corresponding to each FP, the FP identifier and position, and one or more fault causes that may trigger connection recovery will be learned.

For example, FP (1#ODU1 of 1#OTU2 port of network element B) is located in the 1#ODU1 of the 1#OTU2 port of the network element B. It can be further seen that, the FP is located on an input side of the network element. On the FP resource, the fault causes that may trigger connection recovery include: ODU-AIS, ODU-OCI, ODU-LCK, ODU-LOF, and so on. Other FPs are processed similarly.

In the second fault event filtering information, each record at least includes: the FP identifier and position, the fault cause, and the fault fast reporting enable state. It may further include a fault generation or disappearance state. Therefore, the format of the second fault event filtering information format is as follows:

| | | | |
|---|---|---|---|
| FP | Fault cause | Fault generation or disappearance state | Fault fast reporting enable state |

The first fault event filtering information is converted into the second fault event filtering information, and the conversion process of the fault fast reporting enable state includes:
each record in the first fault event filtering information is judged and processed as follows:
if the fault fast reporting enable state of the SNP in the record of the first fault event filtering information is "Allow", when being converted into the second fault event filtering information, in the record of the second fault event filtering information, the fault fast reporting enable states in all the records of the FP bound to the SNP are set to "Allow".
In the present embodiment, since the fault fast reporting enable states of the SNP are all "Allow", the fault fast reporting enable states in the generated second fault event filtering information are all "Allow". That is, the converted second fault event filtering information is as follows:

| FP (related to network element A) | Fault cause | Fault fast reporting enable state | |
|---|---|---|---|
| 1#ODU1 of 8#port of network element A | ODU-AIS | | Allow |
| 1#ODU1 of 8#port of network element A | ODU-OCI | | Allow |
| 1#ODU1 of 8#port of network element A | ODU-LCK | | Allow |
| 1#ODU1 of 8#port of network element A | ODU-LOF | | Allow |
| 1#ODU1 of 1#port of network element A | ODU-AIS | | Allow |
| 1#ODU1 of 1#port of network element A | ODU-OCI | | Allow |
| 1#ODU1 of 1#port of network element A | ODU-LCK | | Allow |

| FP (related to network element B) | Fault cause | Fault fast reporting enable state | |
|---|---|---|---|
| 1#ODU1 of 1#port of network element B | ODU-AIS | | Allow |
| 1#ODU1 of 1#port of network element B | ODU-OCI | | Allow |
| 1#ODU1 of 1#port of network element B | ODU-LCK | | Allow |
| 1#ODU1 of 1#port of network element B | ODU-LOF | | Allow |
| 1#ODU1 of 2#port of network element B | ODU-AIS | | Allow |
| 1#ODU1 of 2#port of network element B | ODU-OCI | | Allow |
| 1#ODU1 of 2#port of network element B | ODU-LCK | | Allow |

| FP (related to network element Z) | Fault cause | | Fault fast reporting enable state |
|---|---|---|---|
| 1#ODU1 of 1#port of network element Z | ODU-AIS | | Allow |
| 1#ODU1 of 1#port of network element Z | ODU-OCI | | Allow |
| 1#ODU1 of 1#port of network element Z | ODU-LCK | | Allow |
| 1#ODU1 of 1#port of network element Z | ODU-LOF | | Allow |
| 1#ODU1 of 8#port of network element Z | ODU-AIS | | Allow |
| 1#ODU1 of 8#port of network element Z | ODU-OCI | | Allow |
| 1#ODU1 of 8#port of network element Z | ODU-LCK | | Allow |

Step D: the TAP configures the second fault event filtering information to forwarding plane network elements A, B and Z. In the present embodiment, each network element only needs to receive the record of the second fault event filtering information of the own network element.

### Example 2:

On the basis of Example 1, after the ODU 1 connection is deleted, the configured fault event filtering information is canceled, that is, the fault fast reporting enable state in the first fault event filtering information is set to "Prohibit".

Step A: an LRM generates or receives first fault event filtering information.

In the present embodiment, the first fault event filtering information generated by the LRM includes 6 fault event filtering information records, and each record at least includes: an SNP identifier and a fault fast reporting enable state. All records are as follows:

| SNP identifier | | Fault fast reporting enable state | |
|---|---|---|---|
| | SNP-A8 | | Prohibit |
| | SNP-A1 | | Prohibit |
| | SNP-B1 | | Prohibit |
| | SNP-B2 | | Prohibit |
| | SNP-Z1 | | Prohibit |
| | SNP-Z8 | | Prohibit |

The first fault event filtering information may also come from other configurations, such as a network management system EMS/NMS, and other components in the MCC system, such as a CC.

Step B: the LRM transmits the first fault event filtering information to a TAP.

Step C: the TAP converts the first fault event filtering information into second fault event filtering information according to a binding relationship between an SNP and an FP, and forwarding technical features of the FP. In the present embodiment, the binding relationship is shown in Table 1, each FP is only bound to one SNP, and correspondingly, 6 SNPs correspond to 6 FPs.

When the second fault event filtering information is generated, the second fault event filtering information may include multiple records, and each record at least includes: FP identifier and position, a fault cause, and a fault fast reporting enable state.

In the present embodiment, according to a network hierarchical structure corresponding to each FP, the FP identifier and position, and one or more fault causes that may trigger connection recovery will be learned. For example, FP (1#ODU1 of 1#OTU2 port of network element B) is located in the 1#ODU1 of the 1#OTU2 port of the network element B. It can be further seen that, the FP is located on an input side of the network element. On the FP resource, the fault causes that may trigger connection recovery include: ODU-AIS, ODU-OCI, ODU-LCK, ODU-LOF, and so on. Other FPs are processed similarly.

In the second fault event filtering information, each record at least includes: the FP identifier and position, the fault cause, and the fault fast reporting enable state. It may further include a fault generation or disappearance state. Therefore, the format of the second fault event filtering information format is as follows:

| | | | |
|---|---|---|---|
| FP | Fault cause | Fault generation or disappearance state | Fault fast reporting enable state |

The first fault event filtering information is converted into the second fault event filtering information, and the conversion process of the fault fast reporting enable state includes:
each record in the first fault event filtering information is judged and processed as follows:
if the fault fast reporting enable state of the SNP in the record of the first fault event filtering information is Prohibit, when being converted into the second fault event filtering information, in the record of the second fault event filtering information:
if the SNP and the FP are bound in a one-to-one manner, all the fault fast reporting enable states of the FP bound to the SNP are set as "Prohibit";
if the SNP and the FP are not bound in the one-to-one manner, it means that the FP bound to the SNP is also bound to other SNPs, at this time, the fault fast reporting enable states of these "other SNPs" need to be checked, and the fault fast reporting enable state of the FP is determined accordingly:
if the fault fast reporting enable state in the first fault event filtering information corresponding to at least one SNP among these "other SNPs" is "Allow", then all the fault fast reporting enable states related to the FP are set to "Allow";
otherwise, all the fault fast reporting enable states related to the FP are set to "Prohibit"; and in the present embodiment, since the fault fast reporting enable states of the SNP are all "Prohibit", the fault fast reporting enable states in the generated second fault event filtering information are all "Prohibit". That is, the converted second fault event filtering information is as follows:

| FP (related to network element A) | Fault cause | Fault fast reporting enable state | |
|---|---|---|---|
| 1#ODU1 of 8#port of network element A | ODU-AIS | | Prohibit |
| 1#ODU1 of 8#port of network element A | ODU-OCI | | Prohibit |
| 1#ODU1 of 8#port of network element A | ODU-LCK | | Prohibit |
| 1#ODU1 of 8#port of network element A | ODU-LOF | | Prohibit |
| 1#ODU1 of 1#port of network element A | ODU-AIS | | Prohibit |
| 1#ODU1 of 1#port of network element A | ODU-OCI | | Prohibit |
| 1#ODU1 of 1#port of network element A | ODU-LCK | | Prohibit |

| FP (related to network element B) | Fault cause | Fault fast reporting enable state | |
|---|---|---|---|
| 1#ODU1 of 1#port of network element B | ODU-AIS | | Prohibit |
| 1#ODU1 of 1#port of network element B | ODU-OCI | | Prohibit |
| 1#ODU1 of 1#port of network element B | ODU-LCK | | Prohibit |
| 1#ODU1 of 1#port of network element B | ODU-LOF | | Prohibit |
| 1#ODU1 of 2#port of network element B | ODU-AIS | | Prohibit |
| 1#ODU1 of 2#port of network element B | ODU-OCI | | Prohibit |
| 1#ODU1 of 2#port of network element B | ODU-LCK | | Prohibit |

| FP (related to network element Z) | Fault cause | Fault fast reporting enable state | |
|---|---|---|---|
| 1#ODU1 of 1#port of network element Z | ODU-AIS | | Prohibit |
| 1#ODU1 of 1#port of network element Z | ODU-OCI | | Prohibit |
| 1#ODU1 of 1#port of network element Z | ODU-LCK | | Prohibit |
| 1#ODU1 of 1#port of network element Z | ODU-LOF | | Prohibit |
| 1#ODU1 of 8#port of network element Z | ODU-AIS | | Prohibit |
| 1#ODU1 of 8#port of network element Z | ODU-OCI | | Prohibit |
| 1#ODU1 of 8#port of network element Z | ODU-LCK | | Prohibit |

Step D: the TAP configures the second fault event filtering information to forwarding plane network elements A, B and Z. In the present embodiment, each network element only needs to receive the record of the second fault event filtering information of the own network element.

### Example 3:

In a topology composed of four network elements ABCZ, the network elements are interconnected by OTU2 links. On this network, an ODU 1 connection between a 8# port of a point A point and the 8# port of a point Z may be established through an MCC system, such as an SDN controller or a control plane. No TCM related fault monitoring is configured. Table 1 shows a binding relationship between a forwarding plane resource, that is, an SNP, used by the connection and an FP.

In order to accelerate the fault recovery of the ODU1 connection, the MCC system may configure a specific SNP to allow fault reporting or prohibit fault reporting. In present embodiment, the fault fast reporting enable states of all the SNPs used by the connection are set to allow, that is, the fault of the forwarding plane resource used by the connection may be rapidly reported to the MCC system through FRM.

Step A: an LRM generates or receives first fault event filtering information.

In the present embodiment, the first fault event filtering information generated by the LRM includes 6 fault event filtering information records, and each record at least includes: an SNP identifier and a fault fast reporting enable state. All records are as follows:

| SNP identifier | | Fault fast reporting enable state | |
|---|---|---|---|
| | SNP-A8 | | Allow |
| | SNP-A1 | | Allow |
| | SNP-B1 | | Allow |
| | SNP-B2 | | Allow |
| | SNP-Z1 | | Allow |
| | SNP-Z8 | | Allow |

Step B: the LRM transmits the first fault event filtering information to an RN module.

Step C: the RN module converts the first fault event filtering information into third fault event filtering information; a subnetwork point configuration identifier in the first fault event filtering information is equivalently converted into the subnetwork point configuration identifier in the third fault event filtering information, and the fault fast reporting enable state in the first fault event filtering information is equivalently converted into the fault fast reporting enable state in the third fault event filtering information.

Step D: the RN module transmits the third fault event filtering information to a TAP module. The RN module may store the first fault event filtering information and the third fault event filtering information.

Step E: the TAP converts the third fault event filtering information into second fault event filtering information according to the binding relationship between the SNP and the FP and forwarding technical features of the FP.

In the present embodiment, the binding relationship is show in Table, each FP is only bound to one SNP, and correspondingly, 6 SNPs correspond to 6 FPs.

When the second fault event filtering information is generated, the second fault event filtering information may include multiple records, and each record at least includes: FP identifier and position, a fault cause, and a fault fast reporting enable state.

In the present embodiment, according to a network hierarchical structure corresponding to each FP, the FP identifier and position, and one or more fault causes that may trigger connection recovery will be learned.

For example, FP (1#ODU1 of 1#OTU2 port of network element B) is located in the 1#ODU1 of the 1#OTU2 port of the network element B. It can be further seen that, the FP is located on an input side of the network element. On the FP resource, the fault causes that may trigger connection recovery include: ODU-AIS, ODU-OCI, ODU-LCK, ODU-LOF, and so on. Other FPs are processed similarly.

In the second fault event filtering information, each record at least includes: the FP identifier and position, the fault cause, and the fault fast reporting enable state. It may further include a fault generation or disappearance state. Therefore, the format of the second fault event filtering information format is as follows:

| | | | |
|---|---|---|---|
| FP | Fault cause | Fault generation or disappearance state | Fault fast reporting enable state |

The first fault event filtering information is converted into the second fault event filtering information, and the conversion process of the fault fast reporting enable state includes:
each record in the first fault event filtering information is judged and processed as follows:
if the fault fast reporting enable state of the SNP in the record of the first fault event filtering information is "Allow", when being converted into the second fault event filtering information, in the record of the second fault event filtering information, the fault fast reporting enable states in all the records of the FP bound to the SNP are set to "Allow".

In the present embodiment, since the fault fast reporting enable states of the SNP are all "Allow", the fault fast reporting enable states in the generated second fault event filtering information are all "Allow". That is, the converted second fault event filtering information is as follows:

| FP (related to network element A) | Fault cause | Fault fast reporting enable state | |
|---|---|---|---|
| 1#ODU1 of 8#port of network element A | ODU-AIS | | Allow |
| 1#ODU1 of 8#port of network element A | ODU-OCI | | Allow |
| 1#ODU1 of 8#port of network element A | ODU-LCK | | Allow |
| 1#ODU1 of 8#port of network element A | ODU-LOF | | Allow |
| 1#ODU1 of 1#port of network element A | ODU-AIS | | Allow |
| 1#ODU1 of 1#port of network element A | ODU-OCI | | Allow |
| 1#ODU1 of 1#port of network element A | ODU-LCK | | Allow |

| FP (related to network element B) | Fault cause | Fault fast reporting enable state | |
|---|---|---|---|
| 1#ODU1 of 1#port of network element B | ODU-AIS | | Allow |
| 1#ODU1 of 1#port of network element B | ODU-OCI | | Allow |
| 1#ODU1 of 1#port of network element B | ODU-LCK | | Allow |
| 1#ODU1 of 1#port of network element B | ODU-LOF | | Allow |
| 1#ODU1 of 2#port of network element B | ODU-AIS | | Allow |
| 1#ODU1 of 2#port of network element B | ODU-OCI | | Allow |
| 1#ODU1 of 2#port of network element B | ODU-LCK | | Allow |

| FP (related to network element Z) | Fault cause | Fault fast reporting enable state | |
|---|---|---|---|
| 1#ODU1 of 1#port of network element Z | ODU-AIS | | Allow |
| 1#ODU1 of 1#port of network element Z | ODU-OCI | | Allow |
| 1#ODU1 of 1#port of network element Z | ODU-LCK | | Allow |
| 1#ODU1 of 1#port of network element Z | ODU-LOF | | Allow |
| 1#ODU1 of 8#port of network element Z | ODU-AIS | | Allow |
| 1#ODU1 of 8#port of network element Z | ODU-OCI | | Allow |
| 1#ODU1 of 8#port of network element Z | ODU-LCK | | Allow |

Step F: the TAP configures the second fault event filtering information to forwarding plane network elements A, B and Z. In the present embodiment, each network element only needs to receive the record of the second fault event filtering information of the own network element.

According to yet another aspect of the embodiments of the present invention, an electronic apparatus for implementing the above method for updating a knowledge graph is further provided. As shown in Fig. 10, the electronic apparatus includes a memory 1002 and a processor 1004, a computer program is stored in the memory 1002, and the processor 1004 is configured to execute the steps in any one of the above method embodiments through the computer program.

## Claims

1. A method for configuring filtering information, comprising:
acquiring (S102) first fault event filtering information, wherein the first fault event filtering information comprises: a subnetwork point identifier and a fault fast reporting enable state corresponding to a subnetwork point, the subnetwork point identifier is used for uniquely identifying the subnetwork point, and the fault fast reporting refers to reporting a fault directly without waiting for fault confirmation, the fault fast reporting enable state comprises: allowing fast reporting or prohibiting fast reporting;
converting (S104) the first fault event filtering information into second fault event filtering information according to a corresponding relationship between the subnetwork point and a forwarding point, wherein the second fault event filtering information comprises: a forwarding point identifier and a fault fast reporting enable state corresponding to the forwarding point, and the forwarding point identifier is used for uniquely identifying the forwarding point; and
configuring (S106) the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

2. The method according to claim 1, wherein the converting the first fault event filtering information into the second fault event filtering information according to the corresponding relationship between the subnetwork point and the forwarding point comprises:
acquiring forwarding feature parameters of the forwarding point, wherein the forwarding feature parameters at least comprise: the forwarding point identifier, the position of the forwarding point in a network layer, and a fault cause corresponding to the forwarding point; and
converting the first fault event filtering information into the second fault event filtering information according to the forwarding feature parameters of the forwarding point and the corresponding relationship between the subnetwork point and the forwarding point, wherein the second fault event filtering information at least further comprises: the position of the forwarding point in the network layer, the fault cause corresponding to the forwarding point, and a state of the fault;
or, wherein the converting the first fault event filtering information into the second fault event filtering information according to the corresponding relationship between the subnetwork point and the forwarding point comprises:
determining, according to the corresponding relationship between the subnetwork point and the forwarding point, the forwarding point corresponding to a first subnetwork point as a first forwarding point;
when the fault fast reporting enable state corresponding to the first subnetwork point is allowing fast reporting, determining the fault fast reporting enable state corresponding to the first forwarding point as allowing fast reporting; and
when the fault fast reporting enable state corresponding to the first subnetwork point is prohibiting fast reporting, determining, according to a type of the corresponding relationship between the first subnetwork point and the first forwarding point, the fault fast reporting enable state corresponding to the first forwarding point, wherein the type of the corresponding relationship comprises: a one-to-one type or a many-to-one type.

3. The method according to claim 2, wherein when the fault fast reporting enable state corresponding to the first subnetwork point is prohibiting fast reporting, determining, according to the type of the corresponding relationship between the first subnetwork point and the first forwarding point, the fault fast reporting enable state corresponding to the first forwarding point comprises:
when the type of the corresponding relationship between the first subnetwork point and the first forwarding point is the one-to-one type, determining the fault fast reporting enable state corresponding to the first forwarding point as prohibiting fast reporting; and
when the type of the corresponding relationship between the first subnetwork point and the first forwarding point is the many-to-one type, judging the fault fast reporting enable states corresponding to other subnetwork points that have a corresponding relationship with the first forwarding point, when the fault fast reporting enable states corresponding to the other subnetwork points are all prohibiting fast reporting, determining the fault fast reporting enable state corresponding to the first forwarding point as prohibiting fast reporting, and when the fault fast reporting enable state corresponding to any subnetwork point among the other subnetwork points is allowing fast reporting, determining the fault fast reporting enable state corresponding to the first forwarding point as allowing fast reporting.

4. The method according to claim 2, wherein,
the position of the forwarding point in the network layer comprises at least one of the following:
an input side of the forwarding plane network element, and an output side of the forwarding plane network element;
or, the fault cause corresponding to the forwarding point comprises: signal failure, and signal degradation;
or, the state of the fault comprises one of the following: a generation state, and a disappearance state.

5. A method for configuring filtering information, comprising:
acquiring first fault event filtering information, wherein the first fault event filtering information comprises: a subnetwork point identifier and a fault fast reporting enable state corresponding to a subnetwork point, the subnetwork point identifier is used for uniquely identifying the subnetwork point, and the fault fast reporting refers to reporting a fault directly without waiting for fault confirmation, the fault fast reporting enable state comprises: allowing fast reporting or prohibiting fast reporting;
generating third fault event filtering information according to the first fault event filtering information, wherein the third fault event filtering information comprises: the subnetwork point identifier and the fault fast reporting enable state corresponding to the subnetwork point, the subnetwork point identifier contained in the third fault event filtering information is obtained by copying the subnetwork point identifier contained in the first fault event filtering information, and the fault fast reporting enable state corresponding to the subnetwork point contained in the third fault event filtering information is obtained by performing copying the fault fast reporting enable state corresponding to the subnetwork point contained in the first fault event filtering information; converting the third fault event filtering information into second fault event filtering information according to a corresponding relationship between the subnetwork point and a forwarding point, wherein the second fault event filtering information comprises: a forwarding point identifier and a fault fast reporting enable state corresponding to the forwarding point, and the forwarding point identifier is used for uniquely identifying the forwarding point; and
configuring the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

6. The method according to claim 5, wherein the converting the third fault event filtering information into the second fault event filtering information according to the corresponding relationship between the subnetwork point and a forwarding point comprises:
acquiring forwarding feature parameters of the forwarding point, wherein the forwarding feature parameters at least comprise: the forwarding point identifier, the position of the forwarding point in a network layer, and a fault cause corresponding to the forwarding point; and
converting the third fault event filtering information into the second fault event filtering information according to the forwarding feature parameters of the forwarding point and the corresponding relationship between the subnetwork point and the forwarding point, wherein the second fault event filtering information at least further comprises: the position of the forwarding point in the network layer, the fault cause corresponding to the forwarding point, and a state of the fault;
or, wherein the converting the third fault event filtering information into the second fault event filtering information according to the corresponding relationship between the subnetwork point and the forwarding point comprises:
determining, according to the corresponding relationship between the subnetwork point and the forwarding point, the forwarding point corresponding to a first subnetwork point as a first forwarding point;
when the fault fast reporting enable state corresponding to the first subnetwork point is allowing fast reporting, determining the fault fast reporting enable state corresponding to the first forwarding point as allowing fast reporting; and
when the fault fast reporting enable state corresponding to the first subnetwork point is prohibiting fast reporting, determining, according to a type of the corresponding relationship between the first subnetwork point and the first forwarding point, the fault fast reporting enable state corresponding to the first forwarding point, wherein the type of the corresponding relationship comprises: a one-to-one type or a many-to-one type.

7. The method according to claim 6, wherein when the fault fast reporting enable state corresponding to the first subnetwork point is prohibiting fast reporting, determining, according to the type of the corresponding relationship between the first subnetwork point and the first forwarding point, the fault fast reporting enable state corresponding to the first forwarding point comprises:
when the type of the corresponding relationship between the first subnetwork point and the first forwarding point is the one-to-one type, determining the fault fast reporting enable state corresponding to the first forwarding point as prohibiting fast reporting; and
when the type of the corresponding relationship between the first subnetwork point and the first forwarding point is the many-to-one type, judging the fault fast reporting enable states corresponding to other subnetwork points that have a corresponding relationship with the first forwarding point, when the fault fast reporting enable states corresponding to the other subnetwork points are all prohibiting fast reporting, determining the fault fast reporting enable state corresponding to the first forwarding point as prohibiting fast reporting, and when the fault fast reporting enable state corresponding to any subnetwork point among the other subnetwork points is allowing fast reporting, determining the fault fast reporting enable state corresponding to the first forwarding point as allowing fast reporting.

8. A system for configuring filtering information, comprising:
a link resources manager module (702), configured to acquire first fault event filtering information, wherein the first fault event filtering information comprises: a subnetwork point identifier and a fault fast reporting enable state corresponding to a subnetwork point, the subnetwork point identifier is used for uniquely identifying the subnetwork point, and the fault fast reporting refers to reporting a fault directly without waiting for fault confirmation, the fault fast reporting enable state comprises: allowing fast reporting or prohibiting fast reporting;
a termination and adaptation execution module (704), configured to convert the first fault event filtering information into second fault event filtering information according to a corresponding relationship between the subnetwork point and a forwarding point, wherein the second fault event filtering information comprises: a forwarding point identifier and a fault fast reporting enable state corresponding to the forwarding point, and the forwarding point identifier is used for uniquely identifying the forwarding point; and
the termination and adaptation execution module is further configured to configure the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

9. The system according to claim 8, wherein the termination and adaptation execution module comprises:
a first acquisition unit, configured to acquire forwarding feature parameters of the forwarding point, wherein the forwarding feature parameters at least comprise: the forwarding point identifier, the position of the forwarding point in a network layer, and a fault cause corresponding to the forwarding point;
a first conversion unit, configured to convert the first fault event filtering information into the second fault event filtering information according to the forwarding feature parameters of the forwarding point and the corresponding relationship between the subnetwork point and the forwarding point, wherein the second fault event filtering information at least further comprises: the position of the forwarding point in the network layer, the fault cause corresponding to the forwarding point, and a state of the fault;
or, wherein the termination and adaptation execution module further comprises:
a first determining unit, configured to determine, according to the corresponding relationship between the subnetwork point and the forwarding point, the forwarding point corresponding to a first subnetwork point as a first forwarding point;
a second determining unit configured to, when the fault fast reporting enable state corresponding to the first subnetwork point is allowing fast reporting, determine the fault fast reporting enable state corresponding to the first forwarding point as allowing fast reporting; and
a third determining unit configured to, when the fault fast reporting enable state corresponding to the first subnetwork point is prohibiting fast reporting, determine, according to a type of the corresponding relationship between the first subnetwork point and the first forwarding point, the fault fast reporting enable state corresponding to the first forwarding point, wherein the type of the corresponding relationship comprises: a one-to-one type or a many-to-one type.

10. The system according to claim 9, wherein the third determining unit comprises:
a first determining sub-unit configured to, when the type of the corresponding relationship between the first subnetwork point and the first forwarding point is the one-to-one type, determine the fault fast reporting enable state corresponding to the first forwarding point as prohibiting fast reporting; and
a second determining sub-unit configured to, when the type of the corresponding relationship between the first subnetwork point and the first forwarding point is the many-to-one type, judge the fault fast reporting enable states corresponding to other subnetwork points that have a corresponding relationship with the first forwarding point, when the fault fast reporting enable states corresponding to the other subnetwork points are all prohibiting fast reporting, determine the fault fast reporting enable state corresponding to the first forwarding point as prohibiting fast reporting, and when the fault fast reporting enable state corresponding to any subnetwork point among the other subnetwork points is allowing fast reporting, determine the fault fast reporting enable state corresponding to the first forwarding point as allowing fast reporting.

11. A system for configuring filtering information, comprising:
a link resources manager module (802), configured to acquire first fault event filtering information, wherein the first fault event filtering information comprises: a subnetwork point identifier and a fault fast reporting enable state corresponding to a subnetwork point, the subnetwork point identifier is used for uniquely identifying the subnetwork point, and the fault fast reporting refers to reporting a fault directly without waiting for fault confirmation, the fault fast reporting enable state comprises: allowing fast reporting or prohibiting fast reporting;
a resource notification module (804), configured to generate third fault event filtering information according to the first fault event filtering information, wherein the third fault event filtering information comprises: the subnetwork point identifier and the fault fast reporting enable state corresponding to the subnetwork point, the subnetwork point identifier contained in the third fault event filtering information is obtained by copying the subnetwork point identifier contained in the first fault event filtering information, and the fault fast reporting enable state corresponding to the subnetwork point contained in the third fault event filtering information is obtained by copying the fault fast reporting enable state corresponding to the subnetwork point contained in the first fault event filtering information;
a termination and adaptation execution module (806), configured to convert the third fault event filtering information into second fault event filtering information according to a corresponding relationship between the subnetwork point and a forwarding point, wherein the second fault event filtering information comprises: a forwarding point identifier and a fault fast reporting enable state corresponding to the forwarding point, and the forwarding point identifier is used for uniquely identifying the forwarding point; and
the termination and adaptation execution module is further configured to configure the second fault event filtering information to a forwarding plane network element, wherein the second fault event filtering information is used for indicating the forwarding plane network element to report a fault according to the forwarding point identifier in the second fault event filtering information and the fault fast reporting enable state corresponding to the forwarding point.

12. The system according to claim 11, wherein the termination and adaptation execution module comprises:
a second acquisition unit, configured to acquire forwarding feature parameters of the forwarding point, wherein the forwarding feature parameters at least comprise: the forwarding point identifier, the position of the forwarding point in a network layer, and a fault cause corresponding to the forwarding point;
a second conversion unit, configured to convert the third fault event filtering information into the second fault event filtering information according to the forwarding feature parameters of the forwarding point and the corresponding relationship between the subnetwork point and the forwarding point, wherein the second fault event filtering information at least further comprises: the forwarding point identifier, the position of the forwarding point in the network layer, the fault cause corresponding to the forwarding point, and a state of the fault;
or, wherein the termination and adaptation execution module further comprises:
a fourth determining unit, configured to determine, according to the corresponding relationship between the subnetwork point and the forwarding point, the forwarding point corresponding to a first subnetwork point as a first forwarding point;
a fifth determining unit configured to, when the fault fast reporting enable state corresponding to the first subnetwork point is allowing fast reporting, determine the fault fast reporting enable state corresponding to the first forwarding point as allowing fast reporting; and
a sixth determining unit configured to, when the fault fast reporting enable state corresponding to the first subnetwork point is prohibiting fast reporting, determine, according to a type of the corresponding relationship between the first subnetwork point and the first forwarding point, the fault fast reporting enable state corresponding to the first forwarding point, wherein the type of the corresponding relationship comprises: a one-to-one type or a many-to-one type.

13. The system according to claim 12, wherein the sixth determining unit comprises:
a third determining sub-unit configured to, when the type of the corresponding relationship between the first subnetwork point and the first forwarding point is the one-to-one type, determine the fault fast reporting enable state corresponding to the first forwarding point as prohibiting fast reporting; and
a fourth determining sub-unit configured to, when the type of the corresponding relationship between the first subnetwork point and the first forwarding point is the many-to-one type, judge the fault fast reporting enable states corresponding to other subnetwork points that have a corresponding relationship with the first forwarding point, when the fault fast reporting enable states corresponding to the other subnetwork points are all prohibiting fast reporting, determine the fault fast reporting enable state corresponding to the first forwarding point as prohibiting fast reporting, and when the fault fast reporting enable state corresponding to any subnetwork point among the other subnetwork points is allowing fast reporting, determine the fault fast reporting enable state corresponding to the first forwarding point as allowing fast reporting.

14. A computer-readable storage medium, wherein a computer program is stored in the computer-readable storage medium, the computer program is configured to execute the method according to any one of claims 1-4, or execute the method according to any one of claims 5-7 when running.

15. An electronic apparatus, comprising a memory and a processor, wherein a computer program stored in the memory, the processor is configured to run the computer program to execute the method according to any one of claims 1-4, or execute the method according to any one of claims 5-7.

## Patentansprüche

1. Verfahren zum Konfigurieren von Filterinformationen, umfassend:
Erfassen (S102) erster Fehlerereignisfilterinformationen, wobei die ersten Fehlerereignisfilterinformationen umfassen: eine Teilnetzpunktkennung und einen Aktivierungszustand für die schnelle Fehlermeldung, der einem Teilnetzpunkt entspricht, wobei die Teilnetzpunktkennung zum eindeutigen Identifizieren des Teilnetzpunkts verwendet wird und die schnelle Fehlermeldung sich auf das direkte Melden eines Fehlers ohne Warten auf eine Fehlerbestätigung bezieht, wobei der Aktivierungszustand für die schnelle Fehlermeldung umfasst: Erlauben der schnellen Meldung oder Verbieten der schnellen Meldung;
Umwandeln (S104) der ersten Fehlerereignisfilterinformationen in zweite Fehlerereignisfilterinformationen gemäß einer entsprechenden Beziehung zwischen dem Teilnetzpunkt und einem Weiterleitungspunkt, wobei die zweiten Fehlerereignisfilterinformationen umfassen: eine Weiterleitungspunktkennung und einen Aktivierungszustand für die schnelle Fehlermeldung, der dem Weiterleitungspunkt entspricht, und wobei die Weiterleitungspunktkennung zum eindeutigen Identifizieren des Weiterleitungspunkts verwendet wird; und
Konfigurieren (S106) der zweiten Fehlerereignisfilterinformationen für ein Netzwerkelement der Weiterleitungsebene, wobei die zweiten Fehlerereignisfilterinformationen verwendet werden, um dem Netzwerkelement der Weiterleitungsebene anzuzeigen, dass ein Fehler gemäß der Weiterleitungspunktkennung in den zweiten Fehlerereignisfilterinformationen und dem Aktivierungszustand für die schnelle Fehlermeldung, der dem Weiterleitungspunkt entspricht, gemeldet werden soll.

2. Verfahren nach Anspruch 1, wobei das Umwandeln der ersten Fehlerereignisfilterinformationen in die zweiten Fehlerereignisfilterinformationen gemäß der entsprechenden Beziehung zwischen dem Teilnetzpunkt und dem Weiterleitungspunkt umfasst:
Erfassen von Weiterleitungsmerkmalparametern des Weiterleitungspunkts, wobei die Weiterleitungsmerkmalparameter mindestens umfassen: die Weiterleitungspunktkennung, die Position des Weiterleitungspunkts in einer Netzwerkschicht und eine dem Weiterleitungspunkt entsprechende Fehlerursache; und
Umwandeln der ersten Fehlerereignisfilterinformationen in die zweiten Fehlerereignisfilterinformationen entsprechend den Weiterleitungsmerkmalparametern des Weiterleitungspunkts und der entsprechenden Beziehung zwischen dem Teilnetzpunkt und dem Weiterleitungspunkt, wobei die zweiten Fehlerereignisfilterinformationen zumindest ferner umfassen: die Position des Weiterleitungspunkts in der Netzwerkschicht, die dem Weiterleitungspunkt entsprechende Fehlerursache und einen Zustand des Fehlers;
oder wobei das Umwandeln der ersten Fehlerereignisfilterinformationen in die zweiten Fehlerereignisfilterinformationen gemäß der entsprechenden Beziehung zwischen dem Teilnetzpunkt und dem Weiterleitungspunkt umfasst:
Bestimmen des einem ersten Teilnetzpunkt entsprechenden Weiterleitungspunkts als ersten Weiterleitungspunkt gemäß der entsprechenden Beziehung zwischen dem Teilnetzpunkt und dem Weiterleitungspunkt;
wenn der Aktivierungszustand für die schnelle Fehlermeldung, der dem ersten Teilnetzpunkt entspricht, eine schnelle Fehlermeldung erlaubt, Bestimmen des Aktivierungszustands für die schnelle Fehlermeldung, der dem ersten Weiterleitungspunkt entspricht, als Erlauben der schnellen Meldung; und
wenn der dem ersten Teilnetzpunkt entsprechende Aktivierungszustand für die schnelle Fehlermeldung die schnelle Fehlermeldung verbietet, Bestimmen des dem ersten Weiterleitungspunkt entsprechenden Aktivierungszustands für die schnelle Fehlermeldung gemäß einem Typ der entsprechenden Beziehung zwischen dem ersten Teilnetzpunkt und dem ersten Weiterleitungspunkt, wobei der Typ der entsprechenden Beziehung umfasst: einen Eins-zu-Eins-Typ oder einen Viele-zu-Eins-Typ.

3. Verfahren nach Anspruch 2, wobei, wenn der Aktivierungszustand für die schnelle Fehlermeldung, der dem ersten Teilnetzpunkt entspricht, die schnelle Fehlermeldung verbietet, das Bestimmen des Aktivierungszustands für die schnelle Fehlermeldung, der dem ersten Weiterleitungspunkt entspricht, gemäß dem Typ der entsprechenden Beziehung zwischen dem ersten Teilnetzpunkt und dem ersten Weiterleitungspunkt umfasst:
wenn der Typ der entsprechenden Beziehung zwischen dem ersten Teilnetzpunkt und dem ersten Weiterleitungspunkt vom Eins-zu-Eins-Typ ist, Bestimmen des Aktivierungszustands für die schnelle Fehlermeldung, der dem ersten Weiterleitungspunkt entspricht, als Verbieten der schnellen Fehlermeldung; und
wenn der Typ der entsprechenden Beziehung zwischen dem ersten Teilnetzpunkt und dem ersten Weiterleitungspunkt vom Viele-zu-Eins-Typ ist, Beurteilen der Aktivierungszustände für die schnelle Fehlermeldung, die anderen Teilnetzpunkten entsprechen, die eine entsprechende Beziehung mit dem ersten Weiterleitungspunkt aufweisen, wenn die Aktivierungszustände für die schnelle Fehlermeldung, die den anderen Teilnetzpunkten entsprechen, alle die schnelle Meldung verbieten, Bestimmen des Aktivierungszustands für die schnelle Fehlermeldung, der dem ersten Weiterleitungspunkt entspricht, als Verbieten der schnellen Meldung, und wenn der Aktivierungszustand für die schnelle Fehlermeldung, der einem beliebigen Teilnetzpunkt unter den anderen Teilnetzpunkten entspricht, eine schnelle Meldung erlaubt, Bestimmen des Aktivierungszustands für die schnelle Fehlermeldung, der dem ersten Weiterleitungspunkt entspricht, als Erlauben der schnellen Meldung.

4. Verfahren nach Anspruch 2, wobei
die Position des Weiterleitungspunkts in der Netzwerkschicht mindestens eines der Folgenden umfasst: eine Eingangsseite des Netzwerkelements der Weiterleitungsebene und eine Ausgangsseite des Netzwerkelements der Weiterleitungsebene;
oder die dem Weiterleitungspunkt entsprechende Fehlerursache umfasst: Signalausfall und Signalverschlechterung;
oder der Fehlerzustand einen der Folgenden umfasst: einen Erzeugungszustand und einen Verschwindungszustand.

5. Verfahren zum Konfigurieren von Filterinformationen, umfassend:
Erfassen erster Fehlerereignisfilterinformationen, wobei die ersten Fehlerereignisfilterinformationen umfassen: eine Teilnetzpunktkennung und einen Aktivierungszustand für die schnelle Fehlermeldung, der einem Teilnetzpunkt entspricht, wobei die Teilnetzpunktkennung zum eindeutigen Identifizieren des Teilnetzpunkts verwendet wird und die schnelle Fehlermeldung sich auf das direkte Melden eines Fehlers ohne Warten auf eine Fehlerbestätigung bezieht, wobei der Aktivierungszustand für die schnelle Fehlermeldung umfasst: Erlauben der schnellen Meldung oder Verbieten der schnellen Meldung;
Erzeugen dritter Fehlerereignisfilterinformationen entsprechend den ersten Fehlerereignisfilterinformationen, wobei die dritten Fehlerereignisfilterinformationen umfassen: die Teilnetzpunktkennung und den Aktivierungszustand für die schnelle Fehlermeldung, der dem Teilnetzpunkt entspricht, wobei die in den dritten Fehlerereignisfilterinformationen enthaltene Teilnetzpunktkennung durch Kopieren der in den ersten Fehlerereignisfilterinformationen enthaltenen Teilnetzpunktkennung erhalten wird, und der Aktivierungszustand für die schnelle Fehlermeldung, der dem Teilnetzpunkt entspricht, der in den dritten Fehlerereignisfilterinformationen enthalten ist, durch Kopieren des Aktivierungszustands für die schnelle Fehlermeldung erhalten wird, der dem Teilnetzpunkt entspricht, der in den ersten Fehlerereignisfilterinformationen enthalten ist;
Umwandeln der dritten Fehlerereignisfilterinformationen in zweite Fehlerereignisfilterinformationen gemäß einer entsprechenden Beziehung zwischen dem Teilnetzpunkt und einem Weiterleitungspunkt, wobei die zweiten Fehlerereignisfilterinformationen umfassen: eine Weiterleitungspunktkennung und einen Aktivierungszustand für die schnelle Fehlermeldung, der dem Weiterleitungspunkt entspricht, und wobei die Weiterleitungspunktkennung zum eindeutigen Identifizieren des Weiterleitungspunkts verwendet wird; zum eindeutigen Identifizieren des Weiterleitungspunkts verwendet wird; und
Konfigurieren der zweiten Fehlerereignisfilterinformationen für ein Netzwerkelement der Weiterleitungsebene, wobei die zweiten Fehlerereignisfilterinformationen verwendet werden, um dem Netzwerkelement der Weiterleitungsebene anzuzeigen, dass ein Fehler gemäß der Weiterleitungspunktkennung in den zweiten Fehlerereignisfilterinformationen und dem Aktivierungszustand für die schnelle Fehlermeldung, der dem Weiterleitungspunkt entspricht, gemeldet werden soll.

6. Verfahren nach Anspruch 5, wobei das Umwandeln der dritten Fehlerereignisfilterinformationen in die zweiten Fehlerereignisfilterinformationen gemäß der entsprechenden Beziehung zwischen dem Teilnetzpunkt und dem Weiterleitungspunkt umfasst:
Erfassen von Weiterleitungsmerkmalparametern des Weiterleitungspunkts, wobei die Weiterleitungsmerkmalparameter mindestens umfassen: die Weiterleitungspunktkennung, die Position des Weiterleitungspunkts in einer Netzwerkschicht und eine dem Weiterleitungspunkt entsprechende Fehlerursache; und
Umwandeln der dritten Fehlerereignisfilterinformationen in die zweiten Fehlerereignisfilterinformationen entsprechend den Weiterleitungsmerkmalparametern des Weiterleitungspunkts und der entsprechenden Beziehung zwischen dem Teilnetzpunkt und dem Weiterleitungspunkt, wobei die zweiten Fehlerereignisfilterinformationen zumindest ferner umfassen: die Position des Weiterleitungspunkts in der Netzwerkschicht, die dem Weiterleitungspunkt entsprechende Fehlerursache und einen Zustand des Fehlers;
oder wobei das Umwandeln der dritten Fehlerereignisfilterinformationen in die zweiten Fehlerereignisfilterinformationen gemäß der entsprechenden Beziehung zwischen dem Teilnetzpunkt und dem Weiterleitungspunkt umfasst:oder wobei das Umwandeln der dritten Fehlerereignisfilterinformationen in die zweiten Fehlerereignisfilterinformationen gemäß der entsprechenden Beziehung zwischen dem Teilnetzpunkt und dem Weiterleitungspunkt umfasst:
Bestimmen des einem ersten Teilnetzpunkt entsprechenden Weiterleitungspunkts als ersten Weiterleitungspunkt gemäß der entsprechenden Beziehung zwischen dem Teilnetzpunkt und dem Weiterleitungspunkt;
wenn der Aktivierungszustand für die schnelle Fehlermeldung, der dem ersten Teilnetzpunkt entspricht, eine schnelle Fehlermeldung erlaubt, Bestimmen des Aktivierungszustands für die schnelle Fehlermeldung, der dem ersten Weiterleitungspunkt entspricht, als Erlauben der schnellen Meldung; und
wenn der dem ersten Teilnetzpunkt entsprechende Aktivierungszustand für die schnelle Fehlermeldung die schnelle Fehlermeldung verbietet, Bestimmen des dem ersten Weiterleitungspunkt entsprechenden Aktivierungszustands für die schnelle Fehlermeldung gemäß einem Typ der entsprechenden Beziehung zwischen dem ersten Teilnetzpunkt und dem ersten Weiterleitungspunkt, wobei der Typ der entsprechenden Beziehung umfasst: einen Eins-zu-Eins-Typ oder einen Viele-zu-Eins-Typ.

7. Verfahren nach Anspruch 6, wobei, wenn der Aktivierungszustand für die schnelle Fehlermeldung, der dem ersten Teilnetzpunkt entspricht, die schnelle Fehlermeldung verbietet, das Bestimmen des Aktivierungszustands für die schnelle Fehlermeldung, der dem ersten Weiterleitungspunkt entspricht, gemäß dem Typ der entsprechenden Beziehung zwischen dem ersten Teilnetzpunkt und dem ersten Weiterleitungspunkt umfasst:
wenn der Typ der entsprechenden Beziehung zwischen dem ersten Teilnetzpunkt und dem ersten Weiterleitungspunkt vom Eins-zu-eins-Typ ist, Bestimmen des Aktivierungszustands für die schnelle Fehlermeldung, der dem ersten Weiterleitungspunkt entspricht, als Verbieten der schnellen Fehlermeldung; und
wenn der Typ der entsprechenden Beziehung zwischen dem ersten Teilnetzpunkt und dem ersten Weiterleitungspunkt vom Viele-zu-eins-Typ ist, Beurteilen der Aktivierungszustände für die schnelle Fehlermeldung, die anderen Teilnetzpunkten entsprechen, die eine entsprechende Beziehung mit dem ersten Weiterleitungspunkt aufweisen, wenn die Aktivierungszustände für die schnelle Fehlermeldung, die den anderen Teilnetzpunkten entsprechen, alle die schnelle Meldung verbieten, Bestimmen des Aktivierungszustands für die schnelle Fehlermeldung, der dem ersten Weiterleitungspunkt entspricht, als Verbieten der schnellen Meldung, und wenn der Aktivierungszustand für die schnelle Fehlermeldung, der einem beliebigen Teilnetzpunkt unter den anderen Teilnetzpunkten entspricht, eine schnelle Meldung erlaubt, Bestimmen des Aktivierungszustands für die schnelle Fehlermeldung, der dem ersten Weiterleitungspunkt entspricht, als Erlauben der schnellen Meldung.

8. System zum Konfigurieren von Filterinformationen, umfassend:
ein Verbindungsressourcenverwaltungsmodul (702), das konfiguriert ist, um erste Fehlerereignisfilterinformationen zu erfassen, wobei die ersten Fehlerereignisfilterinformationen umfassen: eine Teilnetzpunktkennung und einen Aktivierungszustand für die schnelle Fehlermeldung, der einem Teilnetzpunkt entspricht, wobei die Teilnetzpunktkennung zur eindeutigen Identifizierung des Teilnetzpunkts verwendet wird und sich die schnelle Fehlermeldung auf die direkte Meldung eines Fehlers bezieht, ohne auf eine Fehlerbestätigung zu warten, wobei der Aktivierungszustand für die schnelle Fehlermeldung umfasst: Erlauben der schnellen Meldung oder Verbieten der schnellen Meldung;
ein Beendigungs- und Anpassungsausführungsmodul (704), das konfiguriert ist, um die ersten Fehlerereignisfilterinformationen in zweite Fehlerereignisfilterinformationen gemäß einer entsprechenden Beziehung zwischen dem Teilnetzpunkt und einem Weiterleitungspunkt umzuwandeln, wobei die zweiten Fehlerereignisfilterinformationen umfassen: eine Weiterleitungspunktkennung und einen Aktivierungszustand für die schnelle Fehlermeldung, der dem Weiterleitungspunkt entspricht, und die Weiterleitungspunktkennung zur eindeutigen Identifizierung des Weiterleitungspunkts verwendet wird; und
das Beendigungs- und Anpassungsausführungsmodul ferner konfiguriert ist, um die zweiten Fehlerereignisfilterinformationen für ein Netzwerkelement der Weiterleitungsebene zu konfigurieren, wobei die zweiten Fehlerereignisfilterinformationen dazu verwendet werden, dem Netzwerkelement der Weiterleitungsebene anzuzeigen, dass es einen Fehler gemäß der Weiterleitungspunktkennung in den zweiten Fehlerereignisfilterinformationen und dem Aktivierungszustand für die schnelle Fehlermeldung, der dem Weiterleitungspunkt entspricht, melden soll.

9. System nach Anspruch 8, wobei das Beendigungs- und Anpassungsausführungsmodul umfasst:
eine erste Erfassungseinheit, die konfiguriert ist, um Weiterleitungsmerkmalparameter des Weiterleitungspunkts zu erfassen, wobei die Weiterleitungsmerkmalparameter zumindest umfassen: die Weiterleitungspunktkennung, die Position des Weiterleitungspunkts in einer Netzwerkschicht, und eine dem Weiterleitungspunkt entsprechende Fehlerursache;
eine erste Umwandlungseinheit, die konfiguriert ist, um die ersten Fehlerereignisfilterinformationen in die zweiten Fehlerereignisfilterinformationen gemäß den Weiterleitungsmerkmalparametern des Weiterleitungspunkts und der entsprechenden Beziehung zwischen dem Teilnetzpunkt und dem Weiterleitungspunkt umzuwandeln, wobei die zweiten Fehlerereignisfilterinformationen zumindest ferner umfassen: die Position des Weiterleitungspunkts in der Netzwerkschicht, die dem Weiterleitungspunkt entsprechende Fehlerursache und einen Zustand des Fehlers;
oder wobei das Beendigungs- und Anpassungsausführungsmodul ferner umfasst:
eine erste Bestimmungseinheit, die konfiguriert ist, um gemäß der entsprechenden Beziehung zwischen dem Teilnetzpunkt und dem Weiterleitungspunkt den Weiterleitungspunkt, der einem ersten Teilnetzpunkt entspricht, als einen ersten Weiterleitungspunkt zu bestimmen;
eine zweite Bestimmungseinheit, die konfiguriert ist, um, wenn der dem ersten Teilnetzpunkt entsprechende Aktivierungszustand für die schnelle Fehlermeldung eine schnelle Meldung erlaubt, den dem ersten Weiterleitungspunkt entsprechenden Aktivierungszustand für die schnelle Fehlermeldung als Erlauben der schnellen Meldung zu bestimmen; und
eine dritte Bestimmungseinheit, die konfiguriert ist, um, wenn der dem ersten Teilnetzpunkt entsprechende Aktivierungszustand für die schnelle Fehlermeldung eine schnelle Meldung verbietet, den dem ersten Weiterleitungspunkt entsprechenden Aktivierungszustand für die schnelle Fehlermeldung gemäß einem Typ der entsprechenden Beziehung zwischen dem ersten Teilnetzpunkt und dem ersten Weiterleitungspunkt zu bestimmen, wobei der Typ der entsprechenden Beziehung umfasst: einen Eins-zu-Eins-Typ oder einen Viele-zu-Eins-Typ.

10. System nach Anspruch 9, wobei die dritte Bestimmungseinheit umfasst:
eine erste Bestimmungsuntereinheit, die konfiguriert ist, um, wenn der Typ der entsprechenden Beziehung zwischen dem ersten Teilnetzpunkt und dem ersten Weiterleitungspunkt der Eins-zu-Eins-Typ ist, den Aktivierungszustand für die schnelle Fehlermeldung, der dem ersten Weiterleitungspunkt entspricht, als Verbieten der schnellen Meldung zu bestimmen; und
eine zweite Bestimmungsuntereinheit, die konfiguriert ist, um, wenn der Typ der entsprechenden Beziehung zwischen dem ersten Teilnetzpunkt und dem ersten Weiterleitungspunkt der Viele-zu-Eins-Typ ist, die Aktivierungszustände der schnellen Fehlermeldung zu beurteilen, die anderen Teilnetzpunkten entsprechen, die eine entsprechende Beziehung mit dem ersten Weiterleitungspunkt aufweisen, wenn die Aktivierungszustände der schnellen Fehlermeldung, die den anderen Teilnetzpunkten entsprechen, alle die schnelle Meldung verbieten, wenn die Aktivierungszustände für die schnelle Fehlermeldung, die den anderen Teilnetzpunkten entsprechen, alle die schnelle Meldung verbieten, den Aktivierungszustand für die schnelle Fehlermeldung, der dem ersten Weiterleitungspunkt entspricht, als Verbieten der schnellen Meldung bestimmen, und wenn der Aktivierungszustand für die schnelle Fehlermeldung, der einem beliebigen Teilnetzpunkt unter den anderen Teilnetzpunkten entspricht, die schnelle Meldung erlaubt, den Aktivierungszustand für die schnelle Fehlermeldung, der dem ersten Weiterleitungspunkt entspricht, als Erlauben der schnellen Meldung bestimmen.

11. System zum Konfigurieren von Filterinformationen, umfassend:
ein Verbindungsressourcenverwaltungsmodul (802), das konfiguriert ist, um erste Fehlerereignisfilterinformationen zu erfassen, wobei die ersten Fehlerereignisfilterinformationen umfassen: eine Teilnetzpunktkennung und einen Aktivierungszustand für die schnelle Fehlermeldung, der einem Teilnetzpunkt entspricht, wobei die Teilnetzpunktkennung zur eindeutigen Identifizierung des Teilnetzpunkts verwendet wird und sich die schnelle Fehlermeldung auf die direkte Meldung eines Fehlers bezieht, ohne auf eine Fehlerbestätigung zu warten, wobei der Aktivierungszustand für die schnelle Fehlermeldung umfasst: Erlauben der schnellen Meldung oder Verbieten der schnellen Meldung;
ein Ressourcenbenachrichtigungsmodul (804), das konfiguriert ist, um dritte Fehlerereignisfilterinformationen gemäß den ersten Fehlerereignisfilterinformationen zu erzeugen, wobei die dritten Fehlerereignisfilterinformationen umfassen: die Teilnetzpunktkennung und den Aktivierungszustand für die schnelle Fehlermeldung, der dem Teilnetzpunkt entspricht, wobei die in den dritten Fehlerereignisfilterinformationen enthaltene Teilnetzpunktkennung durch Kopieren der in den ersten Fehlerereignisfilterinformationen enthaltenen Teilnetzpunktkennung erhalten wird, und der Aktivierungszustand für die schnelle Fehlermeldung, der dem in den dritten Fehlerereignisfilterinformationen enthaltenen Teilnetzpunkt entspricht, durch Kopieren des Aktivierungszustands für die schnelle Fehlermeldung, welcher dem in den ersten Fehlerereignisfilterinformationen enthaltenen Teilnetzpunkt entspricht, erhalten wird;
ein Beendigungs- und Anpassungsausführungsmodul (806), das konfiguriert ist, um die dritten Fehlerereignisfilterinformationen in zweite Fehlerereignisfilterinformationen gemäß einer entsprechenden Beziehung zwischen dem Teilnetzpunkt und einem Weiterleitungspunkt umzuwandeln, wobei die zweiten Fehlerereignisfilterinformationen umfassen: eine Weiterleitungspunktkennung und einen Aktivierungszustand für die schnelle Fehlermeldung, der dem Weiterleitungspunkt entspricht, und die Weiterleitungspunktkennung zur eindeutigen Identifizierung des Weiterleitungspunkts verwendet wird; und
das Beendigungs- und Anpassungsausführungsmodul ferner konfiguriert ist, um die zweiten Fehlerereignisfilterinformationen für ein Netzwerkelement der Weiterleitungsebene zu konfigurieren, wobei die zweiten Fehlerereignisfilterinformationen dazu verwendet werden, dem Netzwerkelement der Weiterleitungsebene anzuzeigen, dass es einen Fehler gemäß der Weiterleitungspunktkennung in den zweiten Fehlerereignisfilterinformationen und dem Aktivierungszustand für die schnelle Fehlermeldung, der dem Weiterleitungspunkt entspricht, melden soll.

12. System nach Anspruch 11, wobei das Beendigungs- und Anpassungsausführungsmodul umfasst:
eine zweite Erfassungseinheit, die konfiguriert ist, um Weiterleitungsmerkmalparameter des Weiterleitungspunkts zu erfassen, wobei die Weiterleitungsmerkmalparameter zumindest umfassen: die Weiterleitungspunktkennung, die Position des Weiterleitungspunkts in einer Netzwerkschicht, und eine dem Weiterleitungspunkt entsprechende Fehlerursache;
eine zweite Umwandlungseinheit, die konfiguriert ist, um die dritten Fehlerereignisfilterinformationen in die zweiten Fehlerereignisfilterinformationen gemäß den Weiterleitungsmerkmalparametern des Weiterleitungspunkts und der entsprechenden Beziehung zwischen dem Teilnetzpunkt und dem Weiterleitungspunkt umzuwandeln, wobei die zweiten Fehlerereignisfilterinformationen zumindest ferner umfassen: die Weiterleitungspunktkennung, die Position des Weiterleitungspunkts in der Netzwerkschicht, die dem Weiterleitungspunkt entsprechende Fehlerursache und einen Zustand des Fehlers;
oder wobei das Beendigungs- und Anpassungsausführungsmodul ferner umfasst:
eine vierte Bestimmungseinheit, die konfiguriert ist, um gemäß der entsprechenden Beziehung zwischen dem Teilnetzpunkt und dem Weiterleitungspunkt den Weiterleitungspunkt, der einem ersten Teilnetzpunkt entspricht, als einen ersten Weiterleitungspunkt zu bestimmen;
eine fünfte Bestimmungseinheit, die konfiguriert ist, um, wenn der dem ersten Teilnetzpunkt entsprechende Aktivierungszustand für die schnelle Fehlermeldung eine schnelle Meldung erlaubt, den dem ersten Weiterleitungspunkt entsprechenden Aktivierungszustand für die schnelle Fehlermeldung als Erlauben der schnellen Meldung zu bestimmen; und
eine sechste Bestimmungseinheit, die konfiguriert ist, um, wenn der dem ersten Teilnetzpunkt entsprechende Aktivierungszustand für die schnelle Fehlermeldung eine schnelle Meldung verbietet, den dem ersten Weiterleitungspunkt entsprechenden Aktivierungszustand für die schnelle Fehlermeldung gemäß einem Typ der entsprechenden Beziehung zwischen dem ersten Teilnetzpunkt und dem ersten Weiterleitungspunkt zu bestimmen, wobei der Typ der entsprechenden Beziehung umfasst: einen Eins-zu-Eins-Typ oder einen Viele-zu-Eins-Typ.

13. System nach Anspruch 12, wobei die sechste Bestimmungseinheit umfasst:
eine dritte Bestimmungsuntereinheit, die konfiguriert ist, um, wenn der Typ der entsprechenden Beziehung zwischen dem ersten Teilnetzpunkt und dem ersten Weiterleitungspunkt der Eins-zu-Eins-Typ ist, den Aktivierungszustand für die schnelle Fehlermeldung, der dem ersten Weiterleitungspunkt entspricht, als Verbieten der schnellen Meldung zu bestimmen; und
eine vierte Bestimmungsuntereinheit, die konfiguriert ist, um, wenn der Typ der entsprechenden Beziehung zwischen dem ersten Teilnetzpunkt und dem ersten Weiterleitungspunkt der Viele-zu-Eins-Typ ist, die Aktivierungszustände der schnellen Fehlermeldung zu beurteilen, die anderen Teilnetzpunkten entsprechen, die eine entsprechende Beziehung mit dem ersten Weiterleitungspunkt aufweisen, wenn die Aktivierungszustände der schnellen Fehlermeldung, die den anderen Teilnetzpunkten entsprechen, alle die schnelle Meldung verbieten, wenn die Aktivierungszustände für die schnelle Fehlermeldung, die den anderen Teilnetzpunkten entsprechen, alle die schnelle Meldung verbieten, den Aktivierungszustand für die schnelle Fehlermeldung, der dem ersten Weiterleitungspunkt entspricht, als Verbieten der schnellen Meldung bestimmen, und wenn der Aktivierungszustand für die schnelle Fehlermeldung, der einem beliebigen Teilnetzpunkt unter den anderen Teilnetzpunkten entspricht, die schnelle Meldung erlaubt, den Aktivierungszustand für die schnelle Fehlermeldung, der dem ersten Weiterleitungspunkt entspricht, als Erlauben der schnellen Meldung bestimmen.

14. Computerlesbares Speichermedium, wobei ein Computerprogramm in dem computerlesbaren Speichermedium gespeichert ist, wobei das Computerprogramm konfiguriert ist, um das Verfahren nach einem der Ansprüche 1 bis 4 auszuführen, oder das Verfahren nach einem der Ansprüche 5 bis 7 auszuführen, wenn es läuft.

15. Elektronische Einrichtung, umfassend einen Speicher und einen Prozessor, wobei ein Computerprogramm auf dem Speicher gespeichert ist und der Prozessor konfiguriert ist, um das Computerprogramm laufen zu lassen, um das Verfahren nach einem der Ansprüche 1 bis 4 auszuführen oder das Verfahren nach einem der Ansprüche 5 bis 7 auszuführen.

## Revendications

1. Procédé permettant de configurer des informations de filtrage, comprenant :
l'acquisition (S102) de premières informations de filtrage d'événement de défaut, dans lequel les premières informations de filtrage d'événement de défaut comprennent : un identificateur de point de sous-réseau et un état d'habilitation de rapport rapide de défaut correspondant à un point de sous-réseau, l'identificateur de point de sous-réseau est utilisé pour identifier de façon unique le point de sous-réseau, et le rapport rapide de défaut fait référence au fait de rapporter un défaut directement sans attendre de confirmation de défaut, l'état d'habilitation de rapport rapide de défaut comprend : le fait d'autoriser un rapport rapide ou d'interdire un rapport rapide ;
la conversion (S104) des premières informations de filtrage d'événement de défaut en deuxièmes informations de filtrage d'événement de défaut selon une relation correspondante entre le point de sous-réseau et un point d'acheminement, dans lequel les deuxièmes informations de filtrage d'événement de défaut comprennent : un identificateur de point d'acheminement et un état d'habilitation de rapport rapide de défaut correspondant au point d'acheminement, et l'identificateur de point d'acheminement est utilisé pour identifier de façon unique le point d'acheminement ; et
la configuration (S106) des deuxièmes informations de filtrage d'événement de défaut sur un élément de réseau de plan d'acheminement, dans lequel les deuxièmes informations de filtrage d'événement de défaut sont utilisées pour indiquer l'élément de réseau de plan d'acheminement pour rapporter un défaut selon l'identificateur de point d'acheminement dans les deuxièmes informations de filtrage d'événement de défaut et l'état d'habilitation de rapport rapide de défaut correspondant au point d'acheminement.

2. Procédé selon la revendication 1, dans lequel la conversion des premières informations de filtrage d'événement de défaut en les deuxièmes informations de filtrage d'événement de défaut selon la relation correspondante entre le point de sous-réseau et le point d'acheminement comprend :
l'acquisition de paramètres de caractéristique d'acheminement du point d'acheminement, dans lequel les paramètres de caractéristique d'acheminement comprennent au moins : l'identificateur de point d'acheminement, la position du point d'acheminement dans une couche réseau, et une cause de défaut correspondant au point d'acheminement ; et
la conversion des premières informations de filtrage d'événement de défaut en les deuxièmes informations de filtrage d'événement de défaut selon les paramètres de caractéristique d'acheminement du point d'acheminement et la relation correspondante entre le point de sous-réseau et le point d'acheminement, dans lequel les deuxièmes informations de filtrage d'événement de défaut comprennent au moins en outre : la position du point d'acheminement dans la couche réseau, la cause de défaut correspondant au point d'acheminement, et un état du défaut ;
ou, dans lequel la conversion des premières informations de filtrage d'événement de défaut en les deuxièmes informations de filtrage d'événement de défaut selon la relation correspondante entre le point de sous-réseau et le point d'acheminement comprend :
la détermination, selon la relation correspondante entre le point de sous-réseau et le point d'acheminement, du point d'acheminement correspondant à un premier point de sous-réseau en guise de premier point d'acheminement ;
lorsque l'état d'habilitation de rapport rapide de défaut correspondant au premier point de sous-réseau est d'autoriser un rapport rapide, la détermination de l'état d'habilitation de rapport rapide de défaut correspondant au premier point d'acheminement comme étant d'autoriser un rapport rapide ; et
lorsque l'état d'habilitation de rapport rapide de défaut correspondant au premier point de sous-réseau est d'interdire un rapport rapide, la détermination, selon un type de la relation correspondante entre le premier point de sous-réseau et le premier point d'acheminement, de l'état d'habilitation de rapport rapide de défaut correspondant au premier point d'acheminement, dans lequel le type de la relation correspondante comprend : un type un-à-un ou un type plusieurs-à-un.

3. Procédé selon la revendication 2, dans lequel lorsque l'état d'habilitation de rapport rapide de défaut correspondant au premier point de sous-réseau est d'interdire un rapport rapide, la détermination, selon le type de la relation correspondante entre le premier point de sous-réseau et le premier point d'acheminement, de l'état d'habilitation de rapport rapide de défaut correspondant au premier point d'acheminement comprend :
lorsque le type de la relation correspondante entre le premier point de sous-réseau et le premier point d'acheminement est le type un-à-un, la détermination de l'état d'habilitation de rapport rapide de défaut correspondant au premier point d'acheminement comme étant d'interdire un rapport rapide ; et
lorsque le type de la relation correspondante entre le premier point de sous-réseau et le premier point d'acheminement est le type plusieurs-à-un, le fait de juger l'état d'habilitation de rapport rapide de défaut correspondant à d'autres points de sous-réseau qui ont une relation correspondante avec le premier point d'acheminement, lorsque les états d'habilitation de rapport rapide de défaut correspondant aux autres points de sous-réseau sont tous d'interdire un rapport rapide, la détermination de l'état d'habilitation de rapport rapide de défaut correspondant au premier point d'acheminement comme étant d'interdire un rapport rapide, et lorsque l'état d'habilitation de rapport rapide de défaut correspondant à n'importe quel point de sous-réseau parmi les autres points de sous-réseau est d'autoriser un rapport rapide, la détermination de l'état d'habilitation de rapport rapide de défaut correspondant au premier point d'acheminement comme étant d'autoriser un rapport rapide.

4. Procédé selon la revendication 2, dans lequel,
la position du point d'acheminement dans la couche réseau comprend au moins l'un de ce qui suit :
un côté d'entrée de l'élément de réseau de plan d'acheminement, et un côté de sortie de l'élément de réseau de plan d'acheminement ;
ou, la cause de défaut correspondant au point d'acheminement comprend : une défaillance de signal, et une dégradation de signal ;
ou, l'état du défaut comprend l'un parmi les suivants : un état de génération, et un état de disparition.

5. Procédé permettant de configurer des informations de filtrage, comprenant :
l'acquisition de premières informations de filtrage d'événement de défaut, dans lequel les premières informations de filtrage d'événement de défaut comprennent : un identificateur de point de sous-réseau et un état d'habilitation de rapport rapide de défaut correspondant à un point de sous-réseau, l'identificateur de point de sous-réseau est utilisé pour identifier de façon unique le point de sous-réseau, et le rapport rapide de défaut fait référence au fait de rapporter un défaut directement sans attendre de confirmation de défaut, l'état d'habilitation de rapport rapide de défaut comprend : le fait d'autoriser un rapport rapide ou d'interdire un rapport rapide ;
la génération de troisièmes informations de filtrage d'événement de défaut selon les premières informations de filtrage d'événement de défaut, dans lequel les troisièmes informations de filtrage d'événement de défaut comprennent : l'identificateur de point de sous-réseau et l'état d'habilitation de rapport rapide de défaut correspondant au point de sous-réseau, l'identificateur de point de sous-réseau contenu dans les troisièmes informations de filtrage d'événement de défaut est obtenu en copiant l'identificateur de point de sous-réseau contenu dans les premières informations de filtrage d'événement de défaut, et l'état d'habilitation de rapport rapide de défaut correspondant au point de sous-réseau contenu dans les troisièmes informations de filtrage d'événement de défaut est obtenu en mettant en oeuvre une copie de l'état d'habilitation de rapport rapide de défaut correspondant au point de sous-réseau contenu dans les premières informations de filtrage d'événement de défaut ;
la conversion des troisièmes informations de filtrage d'événement de défaut en deuxièmes informations de filtrage d'événement de défaut selon une relation correspondante entre le point de sous-réseau et un point d'acheminement, dans lequel les deuxièmes informations de filtrage d'événement de défaut comprennent : un identificateur de point d'acheminement et un état d'habilitation de rapport rapide de défaut correspondant au point d'acheminement, et l'identificateur de point d'acheminement est utilisé pour identifier de façon unique le point d'acheminement ; et
la configuration des deuxièmes informations de filtrage d'événement de défaut sur un élément de réseau de plan d'acheminement, dans lequel les deuxièmes informations de filtrage d'événement de défaut sont utilisées pour indiquer l'élément de réseau de plan d'acheminement pour rapporter un défaut selon l'identificateur de point d'acheminement dans les deuxièmes informations de filtrage d'événement de défaut et l'état d'habilitation de rapport rapide de défaut correspondant au point d'acheminement.

6. Procédé selon la revendication 5, dans lequel la conversion des troisièmes informations de filtrage d'événement de défaut en les deuxièmes informations de filtrage d'événement de défaut selon la relation correspondante entre le point de sous-réseau et un point d'acheminement comprend :
l'acquisition de paramètres de caractéristique d'acheminement du point d'acheminement, dans lequel les paramètres de caractéristique d'acheminement comprennent au moins : l'identificateur de point d'acheminement, la position du point d'acheminement dans une couche réseau, et une cause de défaut correspondant au point d'acheminement ; et
la conversion des troisièmes informations de filtrage d'événement de défaut en les deuxièmes informations de filtrage d'événement de défaut selon les paramètres de caractéristique d'acheminement du point d'acheminement et la relation correspondante entre le point de sous-réseau et le point d'acheminement, dans lequel les deuxièmes informations de filtrage d'événement de défaut comprennent au moins en outre : la position du point d'acheminement dans la couche réseau, la cause de défaut correspondant au point d'acheminement, et un état du défaut ;
ou, dans lequel la conversion des troisièmes informations de filtrage d'événement de défaut en les deuxièmes informations de filtrage d'événement de défaut selon la relation correspondante entre le point de sous-réseau et le point d'acheminement comprend :
la détermination, selon la relation correspondante entre le point de sous-réseau et le point d'acheminement, du point d'acheminement correspondant à un premier point de sous-réseau en guise de premier point d'acheminement ;
lorsque l'état d'habilitation de rapport rapide de défaut correspondant au premier point de sous-réseau est d'autoriser un rapport rapide, la détermination de l'état d'habilitation de rapport rapide de défaut correspondant au premier point d'acheminement comme étant d'autoriser un rapport rapide ; et
lorsque l'état d'habilitation de rapport rapide de défaut correspondant au premier point de sous-réseau est d'interdire un rapport rapide, la détermination, selon un type de la relation correspondante entre le premier point de sous-réseau et le premier point d'acheminement, de l'état d'habilitation de rapport rapide de défaut correspondant au premier point d'acheminement, dans lequel le type de la relation correspondante comprend : un type un-à-un ou un type plusieurs-à-un.

7. Procédé selon la revendication 6, dans lequel lorsque l'état d'habilitation de rapport rapide de défaut correspondant au premier point de sous-réseau est d'interdire un rapport rapide, la détermination, selon le type de la relation correspondante entre le premier point de sous-réseau et le premier point d'acheminement, de l'état d'habilitation de rapport rapide de défaut correspondant au premier point d'acheminement comprend :
lorsque le type de la relation correspondante entre le premier point de sous-réseau et le premier point d'acheminement est le type un-à-un, la détermination de l'état d'habilitation de rapport rapide de défaut correspondant au premier point d'acheminement comme étant d'interdire un rapport rapide ; et
lorsque le type de la relation correspondante entre le premier point de sous-réseau et le premier point d'acheminement est le type plusieurs-à-un, le fait de juger l'état d'habilitation de rapport rapide de défaut correspondant à d'autres points de sous-réseau qui ont une relation correspondante avec le premier point d'acheminement, lorsque les états d'habilitation de rapport rapide de défaut correspondant aux autres points de sous-réseau sont tous d'interdire un rapport rapide, la détermination de l'état d'habilitation de rapport rapide de défaut correspondant au premier point d'acheminement comme étant d'interdire un rapport rapide, et lorsque l'état d'habilitation de rapport rapide de défaut correspondant à n'importe quel point de sous-réseau parmi les autres points de sous-réseau est d'autoriser un rapport rapide, la détermination de l'état d'habilitation de rapport rapide de défaut correspondant au premier point d'acheminement comme étant d'autoriser un rapport rapide.

8. Système permettant de configurer des informations de filtrage, comprenant :
un module gestionnaire de ressources de liaison (702), configuré pour acquérir des premières informations de filtrage d'événement de défaut, dans lequel les premières informations de filtrage d'événement de défaut comprennent : un identificateur de point de sous-réseau et un état d'habilitation de rapport rapide de défaut correspondant à un point de sous-réseau, l'identificateur de point de sous-réseau est utilisé pour identifier de façon unique le point de sous-réseau, et le rapport rapide de défaut fait référence au fait de rapporter un défaut directement sans attendre de confirmation de défaut, l'état d'habilitation de rapport rapide de défaut comprend : le fait d'autoriser un rapport rapide ou d'interdire un rapport rapide ;
un module d'exécution d'achèvement et d'adaptation (704), configuré pour convertir les premières informations de filtrage d'événement de défaut en deuxièmes informations de filtrage d'événement de défaut selon une relation correspondante entre le point de sous-réseau et un point d'acheminement, dans lequel les deuxièmes informations de filtrage d'événement de défaut comprennent : un identificateur de point d'acheminement et un état d'habilitation de rapport rapide de défaut correspondant au point d'acheminement, et l'identificateur de point d'acheminement est utilisé pour identifier de façon unique le point d'acheminement ; et
le module d'exécution d'achèvement et d'adaptation est configuré en outre pour configurer les deuxièmes informations de filtrage d'événement de défaut sur un élément de réseau de plan d'acheminement, dans lequel les deuxièmes informations de filtrage d'événement de défaut sont utilisées pour indiquer l'élément de réseau de plan d'acheminement pour rapporter un défaut selon l'identificateur de point d'acheminement dans les deuxièmes informations de filtrage d'événement de défaut et l'état d'habilitation de rapport rapide de défaut correspondant au point d'acheminement.

9. Système selon la revendication 8, dans lequel le module d'exécution d'achèvement et d'adaptation comprend :
une première unité d'acquisition, configurée pour acquérir des paramètres de caractéristique d'acheminement du point d'acheminement, dans lequel les paramètres de caractéristique d'acheminement comprennent au moins :
l'identificateur de point d'acheminement, la position du point d'acheminement dans une couche réseau, et une cause de défaut correspondant au point d'acheminement ;
une première unité de conversion, configurée pour convertir les premières informations de filtrage d'événement de défaut en les deuxièmes informations de filtrage d'événement de défaut selon les paramètres de caractéristique d'acheminement du point d'acheminement et la relation correspondante entre le point de sous-réseau et le point d'acheminement, dans lequel les deuxièmes informations de filtrage d'événement de défaut comprennent au moins en outre : la position du point d'acheminement dans la couche réseau, la cause de défaut correspondant au point d'acheminement, et un état du défaut ;
ou, dans lequel le module d'exécution d'achèvement et d'adaptation comprend en outre :
une première unité de détermination, configurée pour déterminer, selon la relation correspondante entre le point de sous-réseau et le point d'acheminement, le point d'acheminement correspondant à un premier point de sous-réseau en guise de premier point d'acheminement ;
une deuxième unité de détermination configurée pour, lorsque l'état d'habilitation de rapport rapide de défaut correspondant au premier point de sous-réseau est d'autoriser un rapport rapide, déterminer l'état d'habilitation de rapport rapide de défaut correspondant au premier point d'acheminement comme étant d'autoriser un rapport rapide ; et
une troisième unité de détermination configurée pour, lorsque l'état d'habilitation de rapport rapide de défaut correspondant au premier point de sous-réseau est d'interdire un rapport rapide, déterminer, selon un type de la relation correspondante entre le premier point de sous-réseau et le premier point d'acheminement, l'état d'habilitation de rapport rapide de défaut correspondant au premier point d'acheminement, dans lequel le type de la relation correspondante comprend : un type un-à-un ou un type plusieurs-à-un.

10. Système selon la revendication 9, dans lequel la troisième unité de détermination comprend :
une première sous-unité de détermination configurée pour, lorsque le type de la relation correspondante entre le premier point de sous-réseau et le premier point d'acheminement est le type un-à-un, déterminer l'état d'habilitation de rapport rapide de défaut correspondant au premier point d'acheminement comme étant d'interdire un rapport rapide ; et
une deuxième sous-unité de détermination configurée pour, lorsque le type de la relation correspondante entre le premier point de sous-réseau et le premier point d'acheminement est le type plusieurs-à-un, juger les états d'habilitation de rapport rapide de défaut correspondant à d'autres points de sous-réseau qui ont une relation correspondante avec le premier point d'acheminement, lorsque les états d'habilitation de rapport rapide de défaut correspondant aux autres points de sous-réseau sont tous d'interdire un rapport rapide, déterminer l'état d'habilitation de rapport rapide de défaut correspondant au premier point d'acheminement comme étant d'interdire un rapport rapide, et lorsque l'état d'habilitation de rapport rapide de défaut correspondant à n'importe quel point de sous-réseau parmi les autres points de sous-réseau est d'autoriser un rapport rapide, déterminer l'état d'habilitation de rapport rapide de défaut correspondant au premier point d'acheminement comme étant d'autoriser un rapport rapide.

11. Système permettant de configurer des informations de filtrage, comprenant :
un module gestionnaire de ressources de liaison (802), configuré pour acquérir des premières informations de filtrage d'événement de défaut, dans lequel les premières informations de filtrage d'événement de défaut comprennent : un identificateur de point de sous-réseau et un état d'habilitation de rapport rapide de défaut correspondant à un point de sous-réseau, l'identificateur de point de sous-réseau est utilisé pour identifier de façon unique le point de sous-réseau, et le rapport rapide de défaut fait référence au fait de rapporter un défaut directement sans attendre de confirmation de défaut, l'état d'habilitation de rapport rapide de défaut comprend : le fait d'autoriser un rapport rapide ou d'interdire un rapport rapide ;
un module de notification de ressource (804), configuré pour générer des troisièmes informations de filtrage d'événement de défaut selon les premières informations de filtrage d'événement de défaut, dans lequel les troisièmes informations de filtrage d'événement de défaut comprennent : l'identificateur de point de sous-réseau et l'état d'habilitation de rapport rapide de défaut correspondant au point de sous-réseau, l'identificateur de point de sous-réseau contenu dans les troisièmes informations de filtrage d'événement de défaut est obtenu en copiant l'identificateur de point de sous-réseau contenu dans les premières informations de filtrage d'événement de défaut, et l'état d'habilitation de rapport rapide de défaut correspondant au point de sous-réseau contenu dans les troisièmes informations de filtrage d'événement de défaut est obtenu en copiant l'état d'habilitation de rapport rapide de défaut correspondant au point de sous-réseau contenu dans les premières informations de filtrage d'événement de défaut ;
un module d'exécution d'achèvement et d'adaptation (806), configuré pour convertir les troisièmes informations de filtrage d'événement de défaut en deuxièmes informations de filtrage d'événement de défaut selon une relation correspondante entre le point de sous-réseau et un point d'acheminement, dans lequel les deuxièmes informations de filtrage d'événement de défaut comprennent : un identificateur de point d'acheminement et un état d'habilitation de rapport rapide de défaut correspondant au point d'acheminement, et l'identificateur de point d'acheminement est utilisé pour identifier de façon unique le point d'acheminement ; et
le module d'exécution d'achèvement et d'adaptation est configuré en outre pour configurer les deuxièmes informations de filtrage d'événement de défaut sur un élément de réseau de plan d'acheminement, dans lequel les deuxièmes informations de filtrage d'événement de défaut sont utilisées pour indiquer l'élément de réseau de plan d'acheminement pour rapporter un défaut selon l'identificateur de point d'acheminement dans les deuxièmes informations de filtrage d'événement de défaut et l'état d'habilitation de rapport rapide de défaut correspondant au point d'acheminement.

12. Système selon la revendication 11, dans lequel le module d'exécution d'achèvement et d'adaptation comprend :
une seconde unité d'acquisition, configurée pour acquérir des paramètres de caractéristique d'acheminement du point d'acheminement, dans lequel les paramètres de caractéristique d'acheminement comprennent au moins :
l'identificateur de point d'acheminement, la position du point d'acheminement dans une couche réseau, et une cause de défaut correspondant au point d'acheminement ;
une seconde unité de conversion, configurée pour convertir les troisièmes informations de filtrage d'événement de défaut en les deuxièmes informations de filtrage d'événement de défaut selon les paramètres de caractéristique d'acheminement du point d'acheminement et la relation correspondante entre le point de sous-réseau et le point d'acheminement, dans lequel les deuxièmes informations de filtrage d'événement de défaut comprennent au moins en outre : l'identificateur de point d'acheminement, la position du point d'acheminement dans la couche réseau, la cause de défaut correspondant au point d'acheminement, et un état du défaut ;
ou, dans lequel le module d'exécution d'achèvement et d'adaptation comprend en outre :
une quatrième unité de détermination, configurée pour déterminer, selon la relation correspondante entre le point de sous-réseau et le point d'acheminement, le point d'acheminement correspondant à un premier point de sous-réseau en guise de premier point d'acheminement ;
une cinquième unité de détermination configurée pour, lorsque l'état d'habilitation de rapport rapide de défaut correspondant au premier point de sous-réseau est d'autoriser un rapport rapide, déterminer l'état d'habilitation de rapport rapide de défaut correspondant au premier point d'acheminement comme étant d'autoriser un rapport rapide ; et
une sixième unité de détermination configurée pour, lorsque l'état d'habilitation de rapport rapide de défaut correspondant au premier point de sous-réseau est d'interdire un rapport rapide, déterminer, selon un type de la relation correspondante entre le premier point de sous-réseau et le premier point d'acheminement, l'état d'habilitation de rapport rapide de défaut correspondant au premier point d'acheminement, dans lequel le type de la relation correspondante comprend : un type un-à-un ou un type plusieurs-à-un.

13. Système selon la revendication 12, dans lequel la sixième unité de détermination comprend :
une troisième sous-unité de détermination configurée pour, lorsque le type de la relation correspondante entre le premier point de sous-réseau et le premier point d'acheminement est le type un-à-un, déterminer l'état d'habilitation de rapport rapide de défaut correspondant au premier point d'acheminement comme étant d'interdire un rapport rapide ; et
une quatrième sous-unité de détermination configurée pour, lorsque le type de la relation correspondante entre le premier point de sous-réseau et le premier point d'acheminement est le type plusieurs-à-un, juger les états d'habilitation de rapport rapide de défaut correspondant à d'autres points de sous-réseau qui ont une relation correspondante avec le premier point d'acheminement, lorsque les états d'habilitation de rapport rapide de défaut correspondant aux autres points de sous-réseau sont tous d'interdire un rapport rapide, déterminer l'état d'habilitation de rapport rapide de défaut correspondant au premier point d'acheminement comme étant d'interdire un rapport rapide, et lorsque l'état d'habilitation de rapport rapide de défaut correspondant à n'importe quel point de sous-réseau parmi les autres points de sous-réseau est d'autoriser un rapport rapide, déterminer l'état d'habilitation de rapport rapide de défaut correspondant au premier point d'acheminement comme étant d'autoriser un rapport rapide.

14. Support de stockage lisible par ordinateur, dans lequel un programme d'ordinateur est stocké dans le support de stockage lisible par ordinateur, le programme d'ordinateur est configuré pour exécuter le procédé selon l'une quelconque des revendications 1 à 4, ou exécuter le procédé selon l'une quelconque des revendications 5 à 7 lorsqu'il est lancé.

15. Appareil électronique, comprenant une mémoire et un processeur, dans lequel un programme d'ordinateur est stocké dans la mémoire, le processeur est configuré pour lancer le programme d'ordinateur pour exécuter le procédé selon l'une quelconque des revendications 1 à 4, ou exécuter le procédé selon l'une quelconque des revendications 5 à 7.
